# EUROPEAN PATENT APPLICATION

(11) **EP 4 651 587 A1**
(43) Date of publication of application: **19.11.2025**
(21) Application number: 24741286.9
(22) Date of filing: 10.01.2024
(51) Int. Cl.: H04W 64/00, H04W 4/02, H04W 92/18

(54) **SIDELINK-BASED POSITIONING METHOD AND APPARATUS, FIRST TERMINAL, AND SECOND TERMINAL**

(30) Priority: 11.01.2023 CN 202310042092
(71) Applicant: Vivo Mobile Communication Co., Ltd., Dongguan, Guangdong 523863 (CN)
(72) Inventor: ZHANG, Hongping, Dongguan, Guangdong 523863 (CN); PAN, Xiang, Dongguan, Guangdong 523863 (CN)
(74) Representative: Walaski, Jan Filip
(86) International application number: PCT/CN2024/071563
(87) International publication number: WO 2024/149289

(57) **Abstract**

This application pertains to the field of communication technologies, and discloses a sidelink-based positioning method and apparatus, a first terminal, and a second terminal. The sidelink-based positioning method in embodiments of this application includes: assigning, by a first terminal, a positioning session identifier corresponding to a sidelink positioning when determining to perform the sidelink positioning, or receiving, by a first terminal, a positioning session identifier that is sent by a third terminal and corresponding to a sidelink positioning; and performing, by the first terminal, the sidelink positioning based on the positioning session identifier.

## Description

This application claims priority to Chinese Patent Application No. 202310042092.9, filed with the China National Intellectual Property Administration on January 11, 2023 and entitled "SIDELINK-BASED POSITIONING METHOD AND APPARATUS, FIRST TERMINAL, AND SECOND TERMINAL", which is incorporated herein by reference in its entirety.

### TECHNICAL FIELD

This application pertains to the field of communication technologies, and specifically relates to a sidelink-based positioning method and apparatus, a first terminal, and a second terminal.

### BACKGROUND

Based on positioning over a Uu interface (a radio interface between user equipment (User Equipment, UE) and a base station), an access and mobility management function (Access and Mobility Management Function, AMF) receives a positioning service request. The AMF sends the positioning service request to a positioning server (such as a location management function (Location Management Function, LMF)), and the positioning server initiates a specific positioning process to obtain a location of the UE. Usually, a positioning session identifier (session ID) is assigned by the AMF, and the positioning session ID is carried at a non-access stratum (Non-access Stratum, NAS).

However, in a sidelink (sidelink, SL) positioning architecture that is not based on a positioning server (for example, an LMF), if anchor (anchor) UE and target (target) UE are beyond coverage of a network, a positioning session ID cannot be assigned by the network, and messages exchanged between the anchor UE and the target UE do not pass through the NAS.

Therefore, in the sidelink positioning architecture that is not based on the positioning server (for example, the LMF), how to support sidelink positioning based on a positioning session is an urgent problem to be resolved.

### SUMMARY

Embodiments of this application provide a sidelink-based positioning method and apparatus, a first terminal, and a second terminal, to resolve a problem of how to support sidelink positioning based on a positioning session.

According to a first aspect, a sidelink-based positioning method is provided and includes:
assigning, by a first terminal, a positioning session identifier corresponding to a sidelink positioning when determining to perform the sidelink positioning, or receiving, by a first terminal, a positioning session identifier that is sent by a third terminal and corresponding to a sidelink positioning; and
performing, by the first terminal, the sidelink positioning based on the positioning session identifier.

According to a second aspect, a sidelink-based positioning method is provided and includes:
receiving, by a second terminal, a first sidelink positioning protocol SLPP message sent by a first terminal, where the first SLPP message includes a positioning session identifier, or the first SLPP message is correlated with the positioning session identifier; and
establishing, by the second terminal based on the first SLPP message, a positioning session corresponding to the positioning session identifier, or correlating the first SLPP message with a positioning session corresponding to the positioning session identifier.

According to a third aspect, a sidelink-based positioning apparatus is provided and includes:
an assignment module, configured to: assign a positioning session identifier corresponding to a sidelink positioning when determining to perform the sidelink positioning, or receive a positioning session identifier that is sent by a third terminal and corresponding to a sidelink positioning; and
a first positioning module, configured to perform the sidelink positioning based on the positioning session identifier.

According to a fourth aspect, a sidelink-based positioning apparatus is provided and includes:
a first receiving module, configured to receive a first sidelink positioning protocol SLPP message sent by a first terminal, where the first SLPP message includes a positioning session identifier, or the first SLPP message is correlated with the positioning session identifier; and
a second positioning module, configured to establish, based on the first SLPP message, a positioning session corresponding to the positioning session identifier, or correlate the first SLPP message with a positioning session corresponding to the positioning session identifier.

According to a fifth aspect, a first terminal is provided. The first terminal includes a processor and a memory. The memory stores a program or instructions capable of running on the processor. When the program or instructions are executed by the processor, the steps of the method according to the first aspect are implemented.

According to a sixth aspect, a first terminal is provided and includes a processor and a communication interface. The processor is configured to assign a positioning session identifier corresponding to a sidelink positioning when determining to perform the sidelink positioning. Alternatively, the communication interface is configured to receive a positioning session identifier that is sent by a third terminal and corresponding to a sidelink positioning. The processor is further configured to perform the sidelink positioning based on the positioning session identifier.

According to a seventh aspect, a second terminal is provided. The second terminal includes a processor and a memory. The memory stores a program or instructions capable of running on the processor. When the program or instructions are executed by the processor, the steps of the method according to the second aspect are implemented.

According to an eighth aspect, a second terminal is provided and includes a processor and a communication interface. The communication interface is configured to receive a first sidelink positioning protocol SLPP message sent by a first terminal, where the first SLPP message includes a positioning session identifier, or the first SLPP message is correlated with the positioning session identifier. The processor is configured to establish, based on the first SLPP message, a positioning session corresponding to the positioning session identifier, or correlate the first SLPP message with a positioning session corresponding to the positioning session identifier.

According to a ninth aspect, a sidelink-based positioning system is provided and includes a first terminal and a second terminal. The first terminal may be configured to perform the steps of the method according to the first aspect. The second terminal may be configured to perform the steps of the method according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the second aspect.

According to a twelfth aspect, a computer program or program product is provided. The computer program or program product is stored in a storage medium. The computer program or program product is executed by at least one processor to implement the steps of the method according to the first aspect or implement the steps of the method according to the second aspect.

In the embodiments of this application, the first terminal assigns the positioning session identifier corresponding to the sidelink positioning when determining to perform the sidelink positioning, or the first terminal receives the positioning session identifier that is sent by the third terminal and corresponding to the sidelink positioning; and then the first terminal performs, based on the positioning session identifier, the sidelink positioning corresponding to the positioning session identifier. In this way, in a sidelink positioning architecture that is not based on a positioning server, the first terminal can perform the sidelink positioning with another terminal that participates in the positioning, thereby supporting the sidelink positioning based on the positioning session.

### BRIEF DESCRIPTION OF DRAWINGS

FIG. 1 is a schematic diagram of a wireless communication system to which an embodiment of this application can be applied;
FIG. 2 is a schematic diagram of a positioning architecture in the related art;
FIG. 3 is a schematic diagram of a protocol stack for interaction between an LMF and UE through the LPP protocol in the related art;
FIG. 4 is a schematic overall flowchart of positioning based on a Uu interface in the related art;
FIG. 5 is a schematic diagram of uplink/downlink/sidelink transmission in an LTE system in the related art;
FIG. 6 is a schematic diagram of a sidelink positioning architecture that is based on a positioning server in the related art;
FIG. 7 is a schematic flowchart of sidelink positioning based on a positioning server in the related art;
FIG. 8 is a schematic diagram of a positioning architecture that is based on a positioning server terminal in the related art;
FIG. 9 is a schematic diagram of a positioning architecture that is not based on a positioning server terminal in the related art;
FIG. 10 is a schematic diagram of a protocol stack with an SLPP protocol layer in the related art;
FIG. 11 is a first schematic flowchart of a sidelink-based positioning method according to an embodiment of this application;
FIG. 12 is a second schematic flowchart of a sidelink-based positioning method according to an embodiment of this application;
FIG. 13 is a first schematic interaction diagram of a sidelink-based positioning method according to an embodiment of this application;
FIG. 14 is a second schematic interaction diagram of a sidelink-based positioning method according to an embodiment of this application;
FIG. 15 is a third schematic interaction diagram of a sidelink-based positioning method according to an embodiment of this application;
FIG. 16 is a first schematic diagram of a structure of a sidelink-based positioning apparatus according to an embodiment of this application;
FIG. 17 is a second schematic diagram of a structure of a sidelink-based positioning apparatus according to an embodiment of this application; and
FIG. 18 is a schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a new radio (New Radio, NR) system or a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other communication systems than the NR system, for example, a 6th Generation (6th Generation, 6G) communication system.

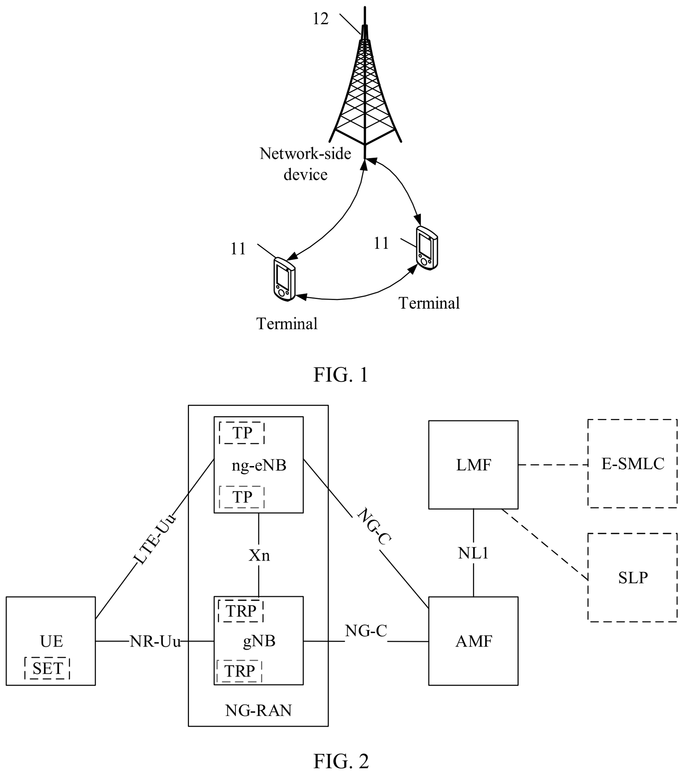

FIG. 1 is a schematic diagram of a wireless communication system to which an embodiment of this application can be applied. The wireless communication system shown in FIG. 1 includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application.

The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

To facilitate clearer understanding of the embodiments of this application, the following first describes some related technical knowledge.

### I. Positioning based on a Uu interface

A positioning technology based on a mobile network supports a plurality of types of positioning, including:
1. A base station sends a downlink positioning reference signal (Positioning Reference Signal, PRS), and user equipment (User Equipment) performs measurement.
2. The UE sends an uplink positioning reference signal, such as an SRS, and the base station performs measurement.
3. The UE measures a navigation satellite signal.

FIG. 2 is a schematic diagram of a positioning architecture in the related art. As shown in FIG. 2, communication is performed between UE and a next generation evolved NodeB (Next Generation Evolved NodeB, ng-eNB) through a long term evolution Uu interface (Long Term Evolution-Uu, LTE-Uu), and communication is performed between UE and a 5G base station (Next Generation NodeB, gNB) through a new radio interface (New Radio-Uu, NR-Uu). Both the ng-eNB and the gNB communicate with an access and mobility management function (Access and Mobility Management Function, AMF) network element through an NG control plane (NG-C). A location management function (Location Management Function, LMF) network element requests UE positioning from the AMF network element through an NL1 interface. The LMF network element performs UE positioning by using an evolved serving mobile location center (Evolved Serving Mobile Location Center, E-SMLC) and the service location protocol (Service Location Protocol, SLP).

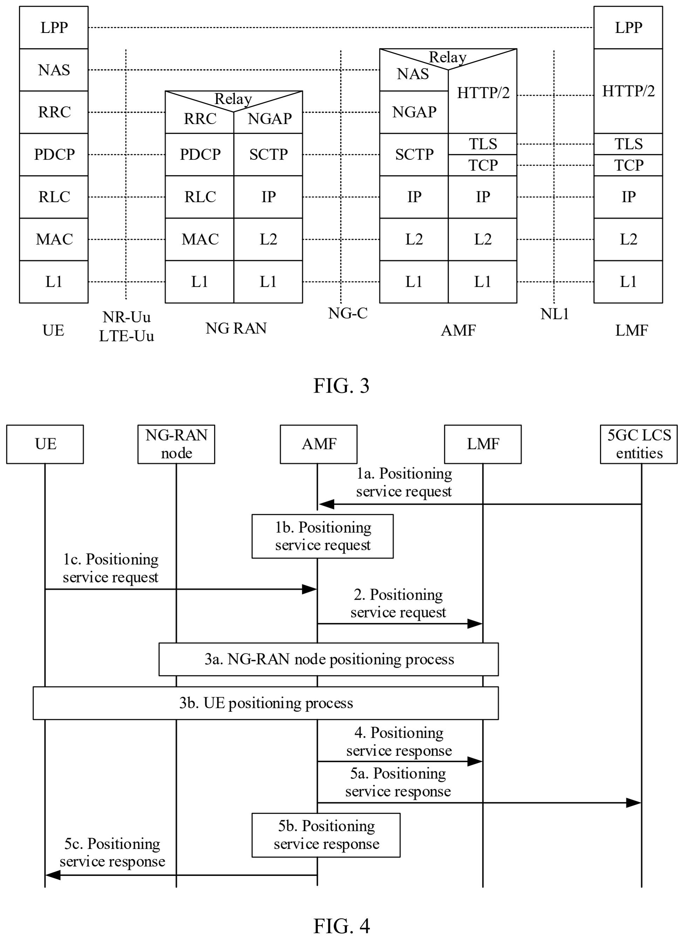

An LMF interacts with UE through the LTE positioning protocol (LTE Positioning Protocol, LPP). FIG. 3 is a schematic diagram of a protocol stack for interaction between an LMF and UE through the LPP protocol in the related art. As shown in FIG. 3, LPP used by the UE includes the non-access stratum (Non-Access Stratum, NAS), radio resource control (Radio Resource Control, RRC), packet data convergence protocol (Packet Data Convergence Protocol, PDCP), radio link control (Radio Link Control, RLC), medium access control (Medium Access Control, MAC), and L1. Protocols used by a 5G radio access network (NG Radio Access Network, NG RAN) include RRC, NG application protocol (NG Application Protocol, NGAP), PDCP, stream control transmission protocol (Stream Control Transmission Protocol, SCTP), RLC, Internet protocol (Internet Protocol, IP), MAC, L2, and L1. Protocols used by an AMF include NAS, NGAP, hypertext transfer protocol release 2 (Hyper Text Transfer Protocol/2, HTTP/2), SCTP, transport layer security protocol (Transport Layer Security, TLS), transmission control protocol (Transmission Control Protocol, TCP), IP, L2, and L1. LPP used by an LMF includes HTTP/2, TLS, TCP, IP, L2, and L1.

FIG. 4 is a schematic overall flowchart of positioning based on a Uu interface in the related art. As shown in FIG. 4, step 1a to step 5c are included.

Step 1a to step 1c: An AMF network element receives, from third-party 5G core network (5GCore, 5GC) location service (LoCation Service, LCS) entities (Entities), a terminal, or the AMF network element itself, a positioning service request for a target terminal. If the target terminal is in a connection management idle state (Connection Management-IDLE, CM-IDLE) in this case, the AMF pages the target terminal to trigger the target terminal to enter a connection management connected state (CM-CONNECTED) (a state corresponding to the terminal on the Uu interface is an RRC_connected state).

Step 2: The AMF sends a positioning service request to a positioning server (LMF), and the LMF determines a positioning method that is based on the Uu interface. The positioning method is classified into uplink-based positioning and downlink-based positioning.

Step 3a and step 3b: The LMF initiates a specific positioning process to obtain a location of the target terminal.

Step 4: In a positioning process, the LMF may need to interact with the terminal through the LPP protocol and/or with a base station through the NRPPa protocol, for example, exchange capabilities, exchange positioning assistance data, and exchange a positioning measurement result. The LMF sends a positioning service response to the AMF, where the response carries the location of the target terminal.

Step 5a to step 5c: After obtaining the location of the target terminal, the AMF separately sends a positioning service response to the third-party 5GC LCS entities, the terminal, or the AMF itself, where the positioning service response includes the location of the target terminal.

A plurality of positioning processes may be simultaneously targeted at a same target terminal. For example, the terminal initiates a positioning request for positioning the terminal itself (step 1c in FIG. 4). In the positioning process (that is, before the positioning ends), a third party also initiates a positioning request for positioning the target UE (1a in FIG. 3). Because quality of service (Quality of Service, QoS) of positioning is different, the LMF also needs to perform a positioning process for the positioning request initiated by the third party. It should be noted that in this application, a positioning process includes a plurality of message exchanges involved in a positioning process (task) for the target UE, such as transmitting positioning capabilities, exchanging positioning assistance data, and exchanging location information. To distinguish between concurrent positioning processes, the 3rd Generation Partnership Project (3rd Generation Partnership Project, 3GPP) introduces a concept of a positioning session (session), which is used to correlate messages of a same positioning process (corresponding to a same positioning request). Because a protocol for exchanging messages between the UE and the LMF is the LPP protocol, a session to which an LPP message exchanged between the UE and the LMF belongs is referred to as an LPP session (session). The corresponding protocol is described as follows:

The LPP session is used between the positioning server and the target device to obtain location-related measurement or location estimation or transmit assistance data. A single LPP session is used to support a single location request (for example, a single terminal terminated location request (Mobile Terminated Location Request, MT-LR), a single terminal originated location request (Mobile Originated Location Request, MO-LR), or a single network induced location request (Network Induced Location Request, NI-LR)). A plurality of LPP sessions may be used between same endpoints to support a plurality of different location requests (as required by Technical Specification (Technical Specification, TS) 23.271[3]). Each LPP session includes one or more LPP transactions, and a single operation (capability exchange, assistance data transmission, or location information transmission) is performed in each LPP transaction. In an evolved UMTS terrestrial radio access network (Evolved UMTS Terrestrial Radio Access Network, E-UTRAN) and/or a 5G radio access network (NG Radio Access Network, NG-RAN), an LPP transaction is implemented as an LPP process. An initiator of the LPP session always initiates a first LPP transaction, but subsequent transactions can be initiated by any end. LPP transactions in the session may occur sequentially, or may occur in parallel. An LPP transaction is represented in the LPP protocol by a transaction identity (Transaction Identity, ID) to correlate messages with one another (for example, a request and a response). Messages in the transaction are linked by a common transaction identifier.

An LPP message is carried in a NAS message and sent to the UE. In a current standard protocol, an LPP positioning session identifier (session ID) is reflected at the NAS, that is, an information element of the NAS message that carries the LPP message is used to indicate a positioning session. The LPP positioning session identifier is referred to as a correlation identifier (Correlation ID) at the NAS. The correlation ID is a variable-length character string. The correlation ID is assigned by the network, and is usually assigned by the AMF after the AMF receives the positioning request. When the AMF exchanges an LPP message with the LMF, the AMF indicates the correlation ID corresponding to the LPP message, so that the LMF can correlate the LPP message with the corresponding positioning session after receiving the LPP message from the AMF. After receiving an LPP message from the LMF, the AMF can add the correlation ID and the LPP message to a NAS message and send the NAS message to the UE, so that the UE can correlate the LPP message with the corresponding LPP positioning session.

### II. Sidelink positioning

A long term evolution (Long Term Evolution, LTE) system supports sidelink (or side link, SL) transmission, that is, data transmission is performed between terminals (User Equipment, UE) directly at a physical layer. On an LTE sidelink, communication is performed based on broadcast. Although the LTE sidelink can be used to support basic security communication in vehicle to everything (Vehicle To Everything, V2X), the LTE sidelink is not suitable for other more advanced V2X services. A 5G new radio (New Radio, NR) system supports a more advanced sidelink transmission design, such as unicast, multicast, or groupcast, so that a more comprehensive service type can be supported.

Starting from Release 12, the LTE system supports the sidelink, for direct data transmission between UEs without using a network device.

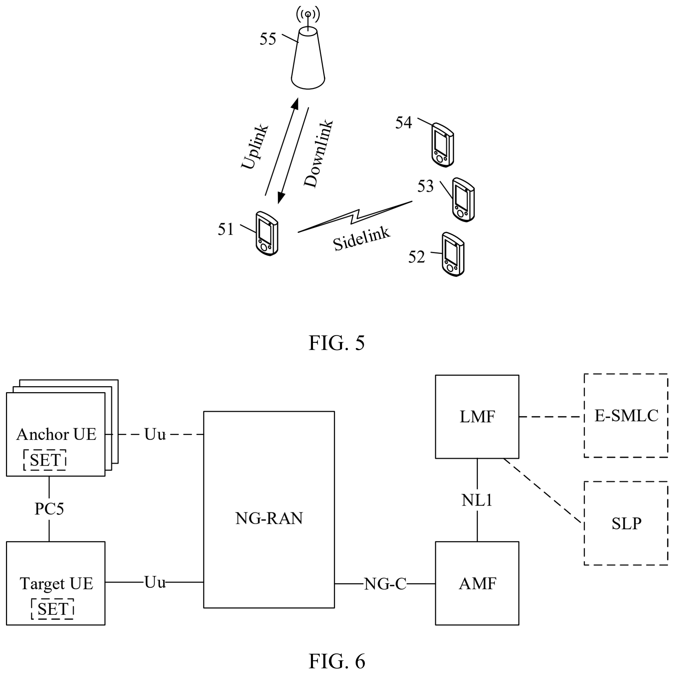

FIG. 5 is a schematic diagram of uplink/downlink/sidelink transmission in an LTE system in the related art. As shown in FIG. 5, a terminal 51 performs transmission with a base station 55 by using an uplink (uplink) and a downlink (downlink), and the terminal 51 performs transmission with each of a terminal 52, a terminal 53, and a terminal 54 by using a sidelink (sidelink). When two UEs need to perform sidelink unicast communication, a sidelink unicast connection needs to be established between the two UEs first.

In addition to positioning based on a reference signal on the Uu interface (a radio interface between the UE and the base station), positioning based on a PC5 interface (a radio interface between UEs) is required in a scenario such as V2X. For example, when a vehicle is not within coverage of a mobile network, sidelink positioning may need to be performed.

According to current standard discussions, in R18, the 3GPP needs to introduce sidelink (sidelink, SL) positioning that is based on the PC5 interface, that is, measure a sidelink PRS on the PC5 interface for positioning. For SL positioning, the current standard agrees to introduce the following roles:
(1) target UE (Target UE): target UE to be positioned, where an absolute location, a relative position, or a range (ranging) of the target UE needs to be obtained for positioning; and
(2) anchor UE (anchor UE): UE that supports positioning of the target UE, for example, provides positioning-related information by sending and/or receiving a sidelink positioning reference signal (SL PRS).

For SL positioning, there are two architectures.

Architecture 1: SL positioning based on a positioning server (LMF). In other words, a positioning architecture based on a Uu interface is used, and the positioning server is responsible for controlling execution of SL positioning. A difference lies in that SL positioning involves at least two UEs (one target UE and one or more anchor UEs), where the target UE measures an SL PRS sent by other anchor UE to implement positioning. FIG. 6 is a schematic diagram of a sidelink positioning architecture that is based on a positioning server in the related art. As shown in FIG. 6, sidelink PRS positioning is performed between target UE and a plurality of anchor UEs through a PC5 interface.

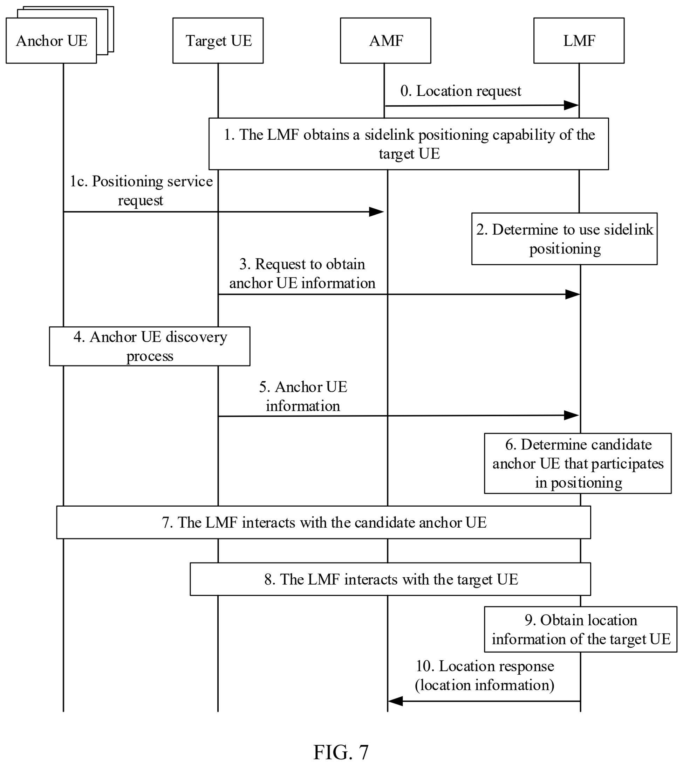

FIG. 7 is a schematic flowchart of sidelink positioning based on a positioning server in the related art. As shown in FIG. 7, the method includes the following steps.

Step 0: An AMF sends a location request (Location Request) for a target terminal (Target UE) to an LMF, where the location request includes quality of service (QoS) of positioning.

Step 1: The LMF obtains a sidelink positioning capability of the target UE.

Step 2: The LMF determines to use a sidelink positioning.

Step 3: The LMF requests to obtain anchor UE (anchor UE) information from the target UE.

Step 4: The target UE performs an anchor UE discovery process.

Step 5: The target UE sends the anchor UE information to the LMF.

Step 6: The LMF determines, based on the received anchor UE information, candidate anchor UE that participates in the positioning.

Step 7: The LMF interacts with the candidate anchor UE.

Step 8: The LMF interacts with the target UE.

Step 9: The LMF obtains location information of the target UE.

Step 10: The LMF sends a location response to the AMF, where the location response carries the location information of the target UE.

The architecture 1 is applicable only to a scenario in which the target UE and/or the anchor UE is within network coverage, and is not applicable to a scenario in which both the target UE and the anchor UE are beyond the network coverage.

Architecture 2: SL positioning that is not based on (or not related to) a positioning server. For this architecture, communication network nodes may not be involved, and positioning is implemented by interaction between a plurality of UEs. It is not concluded whether one of the UEs (positioning server terminal, or referred to as positioning server UE) has a function similar to that of the LMF. Therefore, there may be two possible architectures:

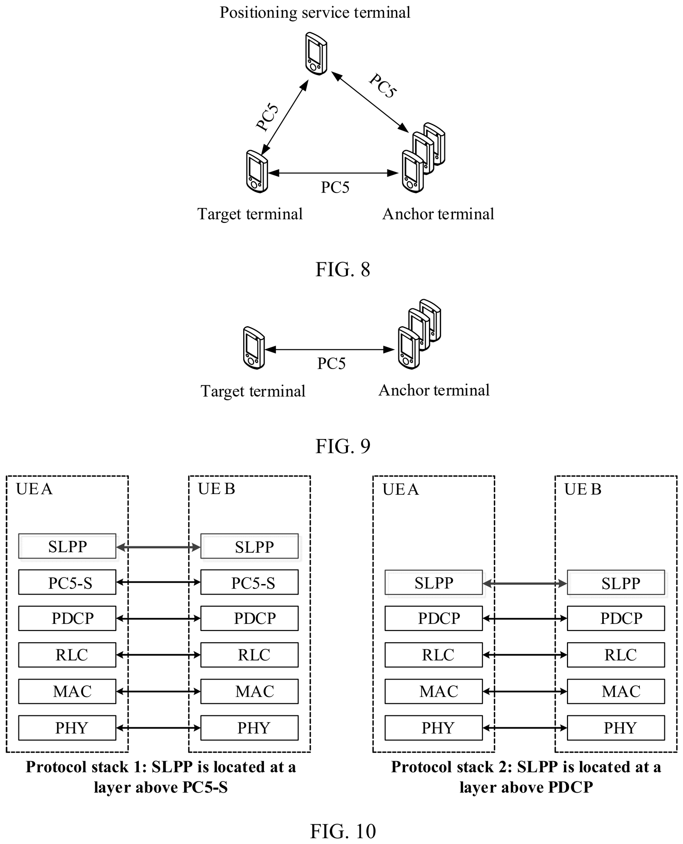

Architecture 2-1: FIG. 8 is a schematic diagram of a positioning architecture that is based on a positioning server terminal in the related art. As shown in FIG. 8, a positioning server terminal (Positioning Server UE) performs positioning separately with a target terminal (Target UE) and a plurality of anchor terminals (anchor UEs) through a PC5 interface, and the target UE also performs positioning with the plurality of anchor UEs through the PC5 interface.

In the architecture 2-1, the positioning server UE is UE that provides a positioning service function. The positioning server UE receives a sidelink positioning request that carries QoS of positioning or the positioning server UE itself triggers a sidelink positioning requirement, and then determines, based on the QoS of positioning, a positioning method used in the sidelink positioning, positioning configuration information, and which UE is used as anchor UE to participate in the positioning. In a sidelink positioning process, the positioning server UE may play a standalone role (UE), or may also act as target UE (in this case, the positioning server UE itself is positioned). In a sidelink positioning process, the UE may be used as positioning server UE. In another sidelink positioning process, the UE may not be used as positioning server UE, for example, may be used only as anchor UE. It should be noted that the positioning server UE plays a role in controlling execution of sidelink positioning in a positioning process, and may also have other names, for example, controlling UE (controlling UE). This is not limited herein.

It should be noted that the positioning server UE may also act as the anchor UE. Therefore, in the foregoing architecture, in some scenarios, there may be no standalone anchor UE. In addition, the positioning server UE and the target UE may be the same UE, or may be different UEs.

Architecture 2-2: FIG. 9 is a schematic diagram of a positioning architecture that is not based on a positioning server terminal in the related art. As shown in FIG. 9, positioning is performed between a target terminal (Target UE) and a plurality of anchor terminals (anchor UEs) through a PC5 interface. There is no positioning server UE in the architecture 2-2, and it may also be considered that the positioning server UE and the target UE are the same UE.

The architecture 2 is applicable to a scenario in which both the target UE and the anchor UE are beyond network coverage, or applicable to a scenario in which the target UE and/or the anchor UE is within network coverage.

The standard has agreed to introduce a new protocol layer between UEs for sidelink positioning, where the protocol layer is referred to as a sidelink positioning protocol (sidelink Positioning Protocol, SLPP) layer. This protocol layer is used to exchange positioning messages for SL positioning. The SLPP protocol layer may be located at a PDCP layer or a PC5-S layer. Currently, no conclusion is reached. FIG. 10 is a schematic diagram of a protocol stack with an SLPP protocol layer in the related art. As shown in FIG. 10, a protocol stack 1 for terminal A and terminal B includes an SLPP protocol layer, PC5-S, PDCP, RLC, MAC, and a physical layer (Physical, PHY), where the SLPP protocol layer is located above PC5-S. A protocol stack 2 for terminal A and terminal B includes an SLPP protocol layer, PDCP, RLC, MAC, and PHY, where the SLPP protocol layer is located above PDCP.

For SL positioning, the standard has agreed to support the following functions (message exchange):
(1) SL positioning capability transfer;
(2) SL positioning assistance data exchange;
(3) SL positioning information transmission;
(4) error handling; and
(5) positioning termination.

In the foregoing positioning architecture 2-1, first, the positioning server UE receives a positioning request that carries QoS of positioning and a target UE ID, or the positioning server UE itself triggers a positioning request. The positioning server UE needs to position the target UE or the positioning server UE (that is, the positioning server UE is also the target UE), and then the positioning server UE identifies and determines, based on information such as the QoS of positioning, the anchor UE participating in the positioning, and determines a positioning method. Next, the positioning server UE performs sidelink positioning by using the sidelink positioning protocol (for example, the SLPP protocol in FIG. 10), to obtain a sidelink positioning result. Specifically, the positioning server UE exchanges sidelink positioning protocol messages with the target UE and the anchor UE, for example, provides positioning assistance information (SL PRS measurement is configured), requests location information, and receives sidelink positioning measurement and other information.

In a research phase, the standard agrees to support SL positioning based on a positioning session, where the SL positioning supports a session-based concept in the SLPP protocol. In the session-based concept, signaling messages in the session may be correlated with involved UE.

A sidelink-based positioning method provided in the embodiments of this application is hereinafter described in detail by using some embodiments and application scenarios thereof with reference to the accompanying drawings.

The sidelink-based positioning method provided in the embodiments of this application may be applied to a sidelink positioning scenario. A first terminal assigns a positioning session identifier corresponding to a sidelink positioning when determining to perform the sidelink positioning, or a first terminal receives a positioning session identifier that is sent by a third terminal and corresponding to a sidelink positioning; and then the first terminal performs, based on the positioning session identifier, the sidelink positioning corresponding to the positioning session identifier. In this way, in a sidelink positioning architecture that is not based on a positioning server, the first terminal can perform the sidelink positioning with another terminal that participates in the positioning, thereby supporting the sidelink positioning based on a positioning session.

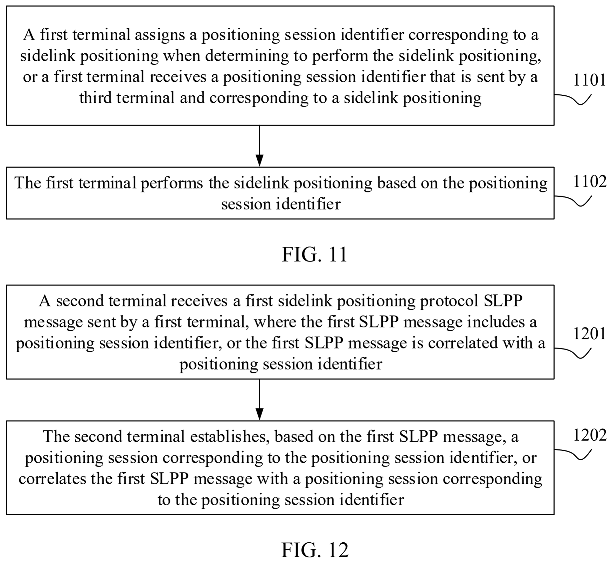

FIG. 11 is a first schematic flowchart of a sidelink-based positioning method according to an embodiment of this application. As shown in FIG. 11, the method includes step 1101 and step 1102.

Step 1101: A first terminal assigns a positioning session identifier corresponding to a sidelink positioning when determining to perform the sidelink positioning, or a first terminal receives a positioning session identifier that is sent by a third terminal and corresponding to a sidelink positioning.

Step 1102: The first terminal performs the sidelink positioning based on the positioning session identifier.

It should be noted that, in a scenario in which this embodiment of this application may be applied to a sidelink positioning, the first terminal, a second terminal, and the third terminal include but are not limited to the foregoing illustrated type of the terminal 11. This is not limited in this embodiment of this application.

Optionally, a field name corresponding to the positioning session identifier may be "SessionID". In some embodiments, the SessionID field may be located in a message header of an SLPP message (message header of SLPP message).

Optionally, in a case of a terminal-only operation (UE-only operation), a terminal that receives an LCS request may perform at least one of the following:
triggering a first SLPP-related procedure; and
assigning (assign) a session ID, and carrying the assigned session ID in the foregoing SLPP message (a receive end may use the received session ID in a same positioning session (positioning session)).

Optionally, the first terminal includes a positioning server terminal (for example, for an architecture 2-1) or a target terminal (for example, for an architecture 2-2) corresponding to the sidelink positioning.

Optionally, the positioning session identifier includes either of the following:
(1) partial or complete terminal identification information of the first terminal or the third terminal, and a sequence number or a character string; or
(2) a sequence number or a character string.

Specifically, the first terminal may participate in a plurality of concurrent sidelink positioning processes at the same time. In the plurality of sidelink positioning processes, positioning session identifiers may be assigned by different terminals, and the positioning session identifiers assigned by the different terminals may be the same, which may cause a collision between the positioning session identifiers. Consequently, an SLPP message in one sidelink positioning process (positioning session) may be correlated with another sidelink positioning process (positioning session), resulting in confusion in the positioning, and a positioning failure. To avoid this conflict problem, the following approaches may be used:
Approach 1: The positioning session identifier includes two parts, where one part is partial or complete terminal identification (UE ID) information of a terminal that assigns the positioning session identifier, and the other part is a sequence number or a character string.
   In this embodiment of this application, because the positioning session identifier is assigned by the first terminal or the third terminal, the positioning session identifier includes partial or complete terminal identification information of the first terminal or the third terminal, a sequence number, or a character string. The UE ID may be an SL layer 2 ID (sidelink layer 2 identifier), or may be another type of UE ID.
Approach 2: The positioning session identifier is an integer-type sequence number or a character string. The receive end receiving the SLPP message uses a combination of "the positioning session identifier" and "a UE ID of a transmit end" in the SLPP message to distinguish between different sidelink positioning processes (positioning sessions). In other words, if SLPP messages received from different terminals include a same positioning session identifier, it may be considered that the SLPP messages correspond to different positioning sessions.
Approach 3: The positioning session identifier is an integer-type sequence number or a character string. However, a range of the integer type is sufficiently large or the character string is sufficiently long. Although there is still a conflict theoretically, a probability of the conflict is low enough to be ignored.

Specifically, the first terminal assigns a positioning session identifier corresponding to a sidelink positioning when the first terminal determines that the sidelink positioning needs to be performed, or the first terminal may receive a positioning session identifier that is sent by the third terminal and corresponding to a sidelink positioning. Then the first terminal may perform, based on the positioning session identifier, the sidelink positioning corresponding to the positioning session identifier.

In the sidelink-based positioning method provided in this embodiment of this application, the first terminal assigns the positioning session identifier corresponding to the sidelink positioning when determining to perform the sidelink positioning, or the first terminal receives the positioning session identifier that is sent by the third terminal and corresponding to the sidelink positioning; and then the first terminal performs, based on the positioning session identifier, the sidelink positioning corresponding to the positioning session identifier. In this way, in a sidelink positioning architecture that is not based on a positioning server, the first terminal can perform the sidelink positioning with another terminal that participates in the sidelink positioning, thereby supporting the sidelink positioning based on the positioning session.

Optionally, that the terminal determines to perform the sidelink positioning includes at least one of the following:
(a) In a case that the first terminal receives a positioning service request, the first terminal determines to perform the sidelink positioning.
   Specifically, the first terminal may receive the positioning service request, that is, in the case that the first terminal receives the positioning service request, the first terminal determines to perform the sidelink positioning. In this case, the first terminal assigns a positioning session identifier (for example, an SLPP session ID or an SL positioning session ID) to the sidelink positioning. Determining to perform the sidelink positioning may be understood as determining to start performing a new positioning task or start a new positioning session.
(b) In a case that the first terminal triggers a positioning requirement, the first terminal determines to perform the sidelink positioning.

Specifically, the first terminal itself may trigger a positioning request, that is, in the case that the first terminal triggers the positioning requirement, the first terminal determines to perform the sidelink positioning, and in this case, the first terminal assigns a positioning session identifier to the sidelink positioning.

Further, the first terminal may be a terminal that determines to perform sidelink positioning, or may be a terminal that controls sidelink positioning (that is, a terminal that is responsible for completing a positioning task), or may be a terminal that receives a positioning service request, or the first terminal may be a terminal that determines to start a new positioning session to perform specific sidelink positioning.

Optionally, a specific implementation of step 1102 includes:
the first terminal sends a first sidelink positioning protocol ((sidelink Positioning Protocol, SLPP) message to the second terminal, where the first SLPP message includes the positioning session identifier, or the first SLPP message is correlated with the positioning session identifier.

Specifically, the first terminal sends the first SLPP message to the second terminal by using a sidelink (sidelink) unicast connection. After receiving the first SLPP message sent by the first terminal, the second terminal may establish, based on the first SLPP message, a positioning session corresponding to the positioning session identifier or correlate the first SLPP message with the positioning session corresponding to the positioning session identifier. The second terminal is a terminal that participates in the sidelink positioning. For example, the second terminal is a target terminal (target UE) or an anchor terminal (anchor UE).

The first SLPP message includes the positioning session identifier, or the first SLPP message is correlated with the positioning session identifier. The positioning session identifier indicates the positioning session with which the first SLPP message is correlated, that is, the SLPP message exchanged in the sidelink positioning process is correlated with the positioning session identifier, or the positioning session identifier is used to correlate SLPP messages exchanged in the positioning task with each other.

Further, the positioning session identifier included in the first SLPP message may be specifically understood as a positioning session identifier represented in the SLPP protocol, and the positioning session identifier may be used as an information element in the SLPP message.

Optionally, that the first SLPP message is correlated with the positioning session identifier includes: the positioning session identifier is carried in a message that is of a protocol layer below SLPP and that corresponds to the first SLPP message.

Specifically, that the first terminal sends a first SLPP message to the second terminal includes: an SLPP layer of the first terminal generates the first SLPP message, the SLPP layer of the first terminal delivers the first SLPP message and the correlated positioning session identifier to a layer below the SLPP layer of the first terminal, and the layer below the SLPP layer generates a message, where the message includes a container (container) corresponding to the first SLPP message and the correlated positioning session identifier. The layer below the SLPP layer may be a PC5-S layer or a PDCP layer. The first terminal sends the message generated by the layer below the SLPP layer to a peer layer of the second terminal (a PC5-S layer or a PDCP layer of the second terminal), and the peer layer of the second terminal delivers the first SLPP message and the correlated positioning session identifier in the message to an SLPP layer of the second terminal.

In the sidelink-based positioning method provided in this embodiment of this application, the first terminal sends the first SLPP message to the second terminal, where the first SLPP message includes the positioning session identifier, or the first SLPP message is correlated with the positioning session identifier, so that the second terminal can establish, based on the first SLPP message, the positioning session corresponding to the positioning session identifier or correlate the first SLPP message with the positioning session corresponding to the positioning session identifier, thereby supporting the sidelink positioning based on the positioning session.

Optionally, the first SLPP message includes first indication information, where the first indication information is used to instruct the second terminal to establish the positioning session corresponding to the positioning session identifier; or the first SLPP message is used to instruct the second terminal to establish the positioning session corresponding to the positioning session identifier.

Specifically, the first SLPP message may further include the first indication information, where the first indication information is used to instruct the second terminal to establish the positioning session corresponding to the positioning session identifier, that is, a new positioning session corresponding to the positioning session identifier. In this case, the first SLPP message may be a message for requesting capability information, a message for providing assistance data, or a message for requesting location information. Alternatively, the first SLPP message is used to instruct the second terminal to establish the positioning session corresponding to the positioning session identifier, that is, the first SLPP message may be a newly introduced positioning session establishment request message. To reduce the number of message exchanges to reduce a delay, the positioning session establishment request message may carry another SLPP message or content of another SLPP message, for example, a message for providing assistance data, or a message for requesting location information, or content thereof. After receiving the first SLPP message, the second terminal may establish, based on the positioning session identifier, the positioning session corresponding to the positioning session identifier.

Optionally, the method further includes:
(1) The first terminal receives a second SLPP message sent by the second terminal, where the second SLPP message includes the positioning session identifier, or the second SLPP message is correlated with the positioning session identifier.

Specifically, when the second terminal needs to send the second SLPP message to the first terminal, the first terminal may receive the second SLPP message sent by the second terminal, where the second SLPP message includes the positioning session identifier, or the second SLPP message is correlated with the positioning session identifier.

Optionally, that the second SLPP message is correlated with the positioning session identifier includes: the positioning session identifier is carried in a message that is of a protocol layer below SLPP and that corresponds to the second SLPP message.

Specifically, that the second terminal sends the second SLPP message to the first terminal includes: the SLPP layer of the second terminal generates the second SLPP message, the SLPP layer of the second terminal delivers the second SLPP message and the correlated positioning session identifier to a layer below the SLPP layer of the second terminal, and the layer below the SLPP layer generates a message, where the message includes a container (container) corresponding to the second SLPP message and the correlated positioning session identifier. The layer below the SLPP layer may be the PC5-S layer or the PDCP layer. The second terminal sends the message generated by the layer below the SLPP layer to a peer layer of the first terminal (the PC5-S layer or the PDCP layer of the first terminal), and the peer layer of the first terminal delivers the second SLPP message and the correlated positioning session identifier in the message to the SLPP layer of the first terminal.

(2) The first terminal correlates the second SLPP message with the positioning session corresponding to the positioning session identifier.

Specifically, after receiving the second SLPP message sent by the second terminal, the first terminal correlates, based on the positioning session identifier, the second SLPP message with the positioning session corresponding to the positioning session identifier.

It should be noted that if the same sidelink positioning process (positioning session) further involves other terminals, the assigned positioning session identifier is still used to communicate with the other terminals, so that SLPP messages exchanged between the plurality of terminals involved in the sidelink positioning process are correlated with the same sidelink positioning by using the positioning session identifier, thereby avoiding confusion in the positioning in a scenario of a plurality of concurrent sidelink positioning processes.

In the sidelink-based positioning method provided in this embodiment of this application, the first terminal receives the second SLPP message sent by the second terminal, where the second SLPP message includes the positioning session identifier, or the second SLPP message is correlated with the positioning session identifier; and then the first terminal correlates the second SLPP message with the positioning session corresponding to the positioning session identifier. The positioning session identifier is used to implement the sidelink positioning based on the positioning session corresponding to the positioning session identifier, thereby supporting the sidelink positioning based on the positioning session.

Optionally, that a first terminal receives a positioning session identifier that is sent by a third terminal and corresponding to a sidelink positioning includes:
the first terminal receives a positioning service request sent by the third terminal, where the positioning service request is used to request the first terminal to perform the sidelink positioning for a target terminal, and the positioning service request includes the positioning session identifier corresponding to the sidelink positioning.

Optionally, the positioning session identifier is assigned by the third terminal, and the third terminal is an initiator of a positioning service request or a trigger of a positioning requirement.

It should be noted that, if a terminal is supported in triggering a plurality of positioning requirements concurrently, to distinguish between different positioning requirements, a positioning session identifier is assigned by a trigger of a positioning requirement or an initiator of a positioning service request. The target terminal may be the third terminal, or may be the first terminal or any other terminal.

Specifically, the third terminal itself initiates the positioning service request or triggers the positioning requirement. In this case, the third terminal assigns the positioning session identifier, and carries the assigned positioning session identifier in a positioning service request message or a positioning requirement message. The positioning session identifier is used in the corresponding sidelink positioning process.

Actually, after assigning the positioning session identifier, the third terminal sends a positioning service request to the first terminal, where the positioning service request is used to request the first terminal to perform sidelink positioning for the target terminal, and the positioning service request includes the positioning session identifier corresponding to the sidelink positioning. Further, the positioning service request may be an SLPP message, a PC5-S message, a PC5 RRC message, or the like.

In the sidelink-based positioning method provided in this embodiment of this application, the first terminal receives the positioning service request sent by the third terminal, where the positioning service request is used to request the first terminal to perform the sidelink positioning for the target terminal, and the positioning service request includes the positioning session identifier corresponding to the sidelink positioning, so that the first terminal can perform the sidelink positioning for the target terminal based on the positioning session identifier, thereby supporting the sidelink positioning based on the positioning session.

Optionally, a specific implementation of step 1102 includes:
(a) The first terminal establishes, based on the positioning service request, the positioning session corresponding to the positioning session identifier.
   Specifically, after receiving the positioning service request, the first terminal establishes the positioning session corresponding to the positioning session identifier, that is, establishes a new sidelink positioning session, and correlates the positioning session identifier in the positioning service request with the sidelink positioning session.
(b) The first terminal performs, based on the positioning session identifier, the sidelink positioning with a terminal participating in the positioning, to determine location information of the target terminal.

Specifically, the first terminal may perform, based on the positioning session identifier in the positioning service request, the sidelink positioning interactively with another terminal participating in the positioning, to determine the location information of the target terminal.

It should be noted that the first terminal or the second terminal that performs the sidelink positioning may participate in a plurality of concurrent sidelink positioning processes at the same time. In the plurality of positioning processes, positioning session identifiers may be assigned by different terminals, and the positioning session identifiers assigned by the different terminals may be the same, which may cause a conflict between the positioning session identifiers. Consequently, an SLPP message in one sidelink positioning process (positioning session) may be correlated with another sidelink positioning process (positioning session), resulting in confusion in the positioning, and a positioning failure. To avoid this conflict problem, the following approaches may be used:
Approach a: The positioning session identifier assigned by the third terminal includes at least two parts, where one part is complete or partial terminal identification (UE ID) information of the third terminal, and the other part is a sequence number or a character string. The UE ID may be an SL layer 2 ID (sidelink layer 2 identifier), or may be another type of UE ID.
Approach b: The positioning session identifier assigned by the third terminal is an integer-type sequence number or a character string. The first terminal distinguishes between different positioning sessions by using a combination of "the positioning session identifier" and "UE ID information of the third terminal" in the received positioning service request. When interacting with the second terminal, the first terminal uses this combination as the positioning session identifier in the SLPP message.
Approach c: The positioning session identifier assigned by the third terminal is an integer-type sequence number or a character string. However, a range of the integer type is sufficiently large or the character string is sufficiently long. Although there is still a conflict theoretically, a probability of the conflict is low enough to be ignored.

In the sidelink-based positioning method provided in this embodiment of this application, the first terminal establishes, based on the positioning service request, the positioning session corresponding to the positioning session identifier, to correlate the positioning session identifier with the sidelink positioning; and then the first terminal performs, based on the positioning session identifier, the sidelink positioning with the terminal participating in the positioning, to determine the location information of the target terminal, thereby supporting the sidelink positioning based on the positioning session.

Optionally, after the first terminal determines the location information of the target terminal, the method further includes:
the first terminal sends a positioning service response to the third terminal, where the positioning service response includes the location information of the target terminal and the positioning session identifier.

Specifically, after the first terminal completes the sidelink positioning process and obtains the location information of the target terminal, the first terminal sends the positioning service response to the third terminal, where the positioning service response includes the location information of the target terminal and the positioning session identifier, that is, the positioning service response carries, in addition to the location information of the target terminal, the positioning session identifier assigned by the third terminal, so that the third terminal can learn which target terminal the location information is for.

After completing the sidelink positioning, the first terminal needs to release the sidelink positioning in a timely manner. There are two cases for how to release the sidelink positioning.

### Case 1: explicit release

Optionally, the method further includes:
the first terminal sends a third SLPP message to the second terminal, where the third SLPP message includes the positioning session identifier, or the third SLPP message is correlated with the positioning session identifier.

Specifically, the first terminal that assigns the positioning session identifier sends the third SLPP message to the second terminal, where the third SLPP message includes the positioning session identifier, or the third SLPP message is correlated with the positioning session identifier. After receiving the third SLPP message sent by the first terminal, the second terminal may release, based on the third SLPP message, the positioning session corresponding to the positioning session identifier.

Optionally, that the third SLPP message is correlated with the positioning session identifier includes: the positioning session identifier is carried in a message that is of a protocol layer below SLPP and that corresponds to the third SLPP message.

Specifically, that the first terminal sends a third SLPP message to the second terminal includes: the SLPP layer of the first terminal generates the third SLPP message, the SLPP layer of the first terminal delivers the third SLPP message and the correlated positioning session identifier to a layer below the SLPP layer of the first terminal, and the layer below the SLPP layer generates a message, where the message includes a container (container) corresponding to the third SLPP message and the correlated positioning session identifier. The layer below the SLPP layer may be the PC5-S layer or the PDCP layer. The first terminal sends the message generated by the layer below the SLPP layer to a peer layer of the second terminal (the PC5-S layer or the PDCP layer of the second terminal), and the peer layer of the second terminal delivers the third SLPP message and the correlated positioning session identifier in the message to the SLPP layer of the second terminal.

Optionally, the third SLPP message includes second indication information, where the second indication information is used to instruct the second terminal to release the positioning session corresponding to the positioning session identifier; or the third SLPP message is used to request or command the second terminal to release the positioning session corresponding to the positioning session identifier.

Specifically, the third SLPP message may further include the second indication information, where the second indication information is used to instruct the second terminal to release the positioning session corresponding to the positioning session identifier; or the third SLPP message may be used to request or command the second terminal to release the positioning session corresponding to the positioning session identifier, that is, the third SLPP message is a positioning session release request or release command message.

Optionally, after the second terminal releases the positioning session corresponding to the positioning session identifier, the method further includes:
(1) The first terminal receives a fourth SLPP message sent by the second terminal, where the fourth SLPP message includes the positioning session identifier, or the fourth SLPP message is correlated with the positioning session identifier.

Specifically, after the second terminal releases the positioning session corresponding to the positioning session identifier, the second terminal sends the fourth SLPP message to the first terminal, where the fourth SLPP message includes the positioning session identifier, or the fourth SLPP message is correlated with the positioning session identifier. The fourth SLPP message may be a positioning session release complete message corresponding to the positioning session identifier.

Optionally, that the fourth SLPP message is correlated with the positioning session identifier includes: the positioning session identifier is carried in a message that is of a protocol layer below SLPP and that corresponds to the fourth SLPP message.

Specifically, that the second terminal sends the fourth SLPP message to the first terminal includes: the SLPP layer of the second terminal generates the fourth SLPP message, the SLPP layer of the second terminal delivers the fourth SLPP message and the correlated positioning session identifier to a layer below the SLPP layer of the second terminal, and the layer below the SLPP layer generates a message, where the message includes a container (container) corresponding to the fourth SLPP message and the correlated positioning session identifier. The layer below the SLPP layer may be the PC5-S layer or the PDCP layer. The second terminal sends the message generated by the layer below the SLPP layer to a peer layer of the first terminal (the PC5-S layer or the PDCP layer of the first terminal), and the peer layer of the first terminal delivers the fourth SLPP message and the correlated positioning session identifier in the message to the SLPP layer of the first terminal.

(2) The first terminal releases, based on the fourth SLPP message, the positioning session corresponding to the positioning session identifier.

Optionally, after receiving the fourth SLPP message sent by the second terminal, the first terminal may learn, based on the fourth SLPP message, that the second terminal completes releasing of the positioning session corresponding to the positioning session identifier. In this case, the first terminal releases the positioning session corresponding to the positioning session identifier.

In the sidelink-based positioning method provided in this embodiment of this application, the first terminal receives the fourth SLPP message sent by the second terminal, where the fourth SLPP message includes the positioning session identifier, or the fourth SLPP message is correlated with the positioning session identifier; and then the first terminal releases, based on the fourth SLPP message, the positioning session corresponding to the positioning session identifier, so that explicit releasing of the positioning session corresponding to the positioning session identifier is implemented, thereby improving resource utilization in the positioning process.

### Case 2: implicit release

Optionally, the method further includes:
in a case that the first terminal completes the sidelink positioning, the first terminal releases the positioning session corresponding to the positioning session identifier.

Specifically, in the case that the first terminal completes the sidelink positioning, the first terminal automatically releases the positioning session corresponding to the positioning session identifier. After completing measurement and sending a corresponding measurement result (for example, sending the location information of the target terminal), the second terminal automatically releases the positioning session corresponding to the positioning session identifier.

It should be noted that the explicit release and the implicit release may be used together. For example, the first terminal releases the positioning session after receiving a release message or a release indication, or releases the positioning session corresponding to the positioning session identifier if no release message or no release indication is received but no SLPP message of the positioning session is received within a period of time.

For sidelink positioning, the standard has agreed to support two types of message exchanges for sidelink positioning assistance data exchange (SL Positioning Assistance Data exchange) (including requesting positioning assistance data and providing positioning assistance data). For a specific positioning session, one terminal needs to send "a message for providing positioning assistance data" to another terminal. In this case, the message for providing positioning assistance data needs to include a positioning session identifier. However, there is still another scenario in which the message for providing positioning assistance data may be included by a base station into a "positioning SIB" and sent by broadcast to a plurality of terminals for use. In this scenario, in a possible implementation, a method for setting a positioning session identifier may include: the base station broadcasts, by using a positioning SIB, a message for providing positioning assistance data, where a positioning session identifier information element in the message for providing positioning assistance data is set by the base station to be absent (absent), or is set to a special session identifier (session ID), or the message for providing positioning assistance data includes one piece of indication information, where the session ID or the indication information is used to indicate that the message for providing positioning assistance data is used for a session-less (session-less) scenario.

FIG. 12 is a second schematic flowchart of a sidelink-based positioning method according to an embodiment of this application. As shown in FIG. 12, the method includes step 1201 and step 1202.

Step 1201: A second terminal receives a first sidelink positioning protocol SLPP message sent by a first terminal, where the first SLPP message includes a positioning session identifier, or the first SLPP message is correlated with the positioning session identifier.

Step 1202: The second terminal establishes, based on the first SLPP message, a positioning session corresponding to the positioning session identifier, or correlates the first SLPP message with a positioning session corresponding to the positioning session identifier.

Optionally, the first terminal includes a positioning server terminal or a target terminal corresponding to the sidelink positioning.

Optionally, the positioning session identifier includes either of the following:
(1) partial or complete terminal identification information of the first terminal or a third terminal, and a sequence number or a character string; or
(2) a sequence number or a character string.

Specifically, the first terminal may participate in a plurality of concurrent sidelink positioning processes at the same time. In the plurality of sidelink positioning processes, positioning session identifiers may be assigned by different terminals, and the positioning session identifiers assigned by the different terminals may be the same, which may cause a collision between the positioning session identifiers. Consequently, an SLPP message in one sidelink positioning process (positioning session) may be correlated with another sidelink positioning process (positioning session), resulting in confusion in the positioning, and a positioning failure. To avoid this conflict problem, the following approaches may be used:
Approach 1: The positioning session identifier includes two parts, where one part is partial or complete terminal identification (UE ID) information of a terminal that assigns the positioning session identifier, and the other part is a sequence number or a character string.
   In this embodiment of this application, because the positioning session identifier is assigned by the first terminal or the third terminal, the positioning session identifier includes partial or complete terminal identification information of the first terminal or the third terminal, a sequence number, or a character string. The UE ID may be an SL layer 2 ID (sidelink layer 2 identifier), or may be another type of UE ID.
Approach 2: The positioning session identifier is an integer-type sequence number or a character string. A receive end receiving the SLPP message uses a combination of "the positioning session identifier" and "a UE ID of a transmit end" in the SLPP message to distinguish between different sidelink positioning processes (positioning sessions). In other words, if SLPP messages received from different terminals include a same positioning session identifier, it may be considered that the SLPP messages correspond to different positioning sessions.
Approach 3: The positioning session identifier is an integer-type sequence number or a character string. However, a range of the integer type is sufficiently large or the character string is sufficiently long. Although there is still a conflict theoretically, a probability of the conflict is low enough to be ignored.

Specifically, when determining to perform a sidelink positioning, the first terminal assigns a positioning session identifier corresponding to the sidelink positioning, the first terminal sends a first SLPP message to the second terminal, and the second terminal receives the first SLPP message sent by the first terminal. The second terminal is a terminal that participates in the sidelink positioning. For example, the second terminal is a target terminal (target UE) or an anchor terminal (anchor UE). The first SLPP message includes the positioning session identifier, or the first SLPP message is correlated with the positioning session identifier. The positioning session identifier indicates the positioning session with which the first SLPP message is correlated, that is, the SLPP message exchanged in the sidelink positioning process is correlated with the positioning session identifier, or the positioning session identifier is used to correlate SLPP messages exchanged in the positioning task with each other. After receiving the first SLPP message, the second terminal establishes, based on the first SLPP message, the positioning session corresponding to the positioning session identifier or correlates the first SLPP message with the positioning session corresponding to the positioning session identifier.

Optionally, that the first SLPP message is correlated with the positioning session identifier includes: the positioning session identifier is carried in a message that is of a protocol layer below SLPP and that corresponds to the first SLPP message.

Specifically, that the first terminal sends a first SLPP message to the second terminal includes: an SLPP layer of the first terminal generates the first SLPP message, the SLPP layer of the first terminal delivers the first SLPP message and the correlated positioning session identifier to a layer below the SLPP layer of the first terminal, and the layer below the SLPP layer generates a message, where the message includes a container (container) corresponding to the first SLPP message and the correlated positioning session identifier. The layer below the SLPP layer may be a PC5-S layer or a PDCP layer. The first terminal sends the message generated by the layer below the SLPP layer to a peer layer of the second terminal (a PC5-S layer or a PDCP layer of the second terminal), and the peer layer of the second terminal delivers the first SLPP message and the correlated positioning session identifier in the message to an SLPP layer of the second terminal.

In the sidelink-based positioning method provided in this embodiment of this application, the second terminal receives the first SLPP message sent by the first terminal, where the first SLPP message includes the positioning session identifier, or the first SLPP message is correlated with the positioning session identifier; and then the second terminal may establish, based on the first SLPP message, the positioning session corresponding to the positioning session identifier or correlate the first SLPP message with the positioning session corresponding to the positioning session identifier, so that the second terminal can perform the sidelink positioning in a sidelink positioning architecture that is not based on a positioning server, thereby supporting the sidelink positioning based on the positioning session.

Optionally, the first SLPP message includes first indication information, where the first indication information is used to instruct the second terminal to establish the positioning session corresponding to the positioning session identifier; or the first SLPP message is used to instruct the second terminal to establish the positioning session corresponding to the positioning session identifier.

Specifically, the first SLPP message may further include the first indication information, where the first indication information is used to instruct the second terminal to establish the positioning session corresponding to the positioning session identifier, that is, a new positioning session corresponding to the positioning session identifier. In this case, the first SLPP message may be a message for requesting capability information, a message for providing assistance data, or a message for requesting location information. Alternatively, the first SLPP message is used to instruct the second terminal to establish the positioning session corresponding to the positioning session identifier, that is, the first SLPP message may be a newly introduced positioning session establishment request message. To reduce the number of message exchanges to reduce a delay, the positioning session establishment request message may carry another SLPP message or content of another SLPP message, for example, a message for providing assistance data, or a message for requesting location information, or content thereof. After receiving the first SLPP message, the second terminal may establish, based on the positioning session identifier, the positioning session corresponding to the positioning session identifier.

Optionally, a specific implementation of step 1202 includes:
the second terminal determines whether the positioning session identifier exists in a context of the second terminal; and in a case that the positioning session identifier does not exist in the context of the second terminal, the second terminal establishes the positioning session corresponding to the positioning session identifier; or in a case that the positioning session identifier exists in the context of the second terminal, the second terminal correlates the first SLPP message with the positioning session corresponding to the positioning session identifier.

Specifically, after receiving the first SLPP message sent by the first terminal, the second terminal determines whether the positioning session identifier included in first SLPP message exists in the context of the second terminal, that is, determines whether the positioning session identifier is a new positioning session identifier; and in the case that the positioning session identifier does not exist in the context of the second terminal, that is, no positioning session corresponds to the positioning session identifier, the second terminal establishes the positioning session corresponding to the positioning session identifier, and correlates the positioning session identifier with the established positioning session, that is, correlates the first SLPP message with the positioning session corresponding to the positioning session identifier; or in the case that the positioning session identifier exists in the context of the second terminal, the second terminal correlates the first SLPP message with the positioning session corresponding to the positioning session identifier.

Optionally, the method further includes:
the second terminal sends a second SLPP message to the first terminal, where the second SLPP message includes the positioning session identifier, or the second SLPP message is correlated with the positioning session identifier.

Specifically, the second terminal may send the second SLPP message to the first terminal, where the second SLPP message includes the positioning session identifier, or the second SLPP message is correlated with the positioning session identifier.

Optionally, that the second SLPP message is correlated with the positioning session identifier includes: the positioning session identifier is carried in a message that is of a protocol layer below SLPP and that corresponds to the second SLPP message.

Specifically, that the second terminal sends the second SLPP message to the first terminal includes: the SLPP layer of the second terminal generates the second SLPP message, the SLPP layer of the second terminal delivers the second SLPP message and the correlated positioning session identifier to a layer below the SLPP layer of the second terminal, and the layer below the SLPP layer generates a message, where the message includes a container (container) corresponding to the second SLPP message and the correlated positioning session identifier. The layer below the SLPP layer may be the PC5-S layer or the PDCP layer. The second terminal sends the message generated by the layer below the SLPP layer to a peer layer of the first terminal (the PC5-S layer or the PDCP layer of the first terminal), and the peer layer of the first terminal delivers the second SLPP message and the correlated positioning session identifier in the message to the SLPP layer of the first terminal.

After completing the sidelink positioning, the second terminal needs to release the sidelink positioning in a timely manner. There are two cases for how to release the sidelink positioning.

### Case 1: explicit release

Optionally, the method further includes:
(a) The second terminal receives a third SLPP message sent by the first terminal, where the third SLPP message includes the positioning session identifier, or the third SLPP message is correlated with the positioning session identifier.
   Specifically, the second terminal may receive the third SLPP message sent by the first terminal, where the third SLPP message includes the positioning session identifier, or the third SLPP message is correlated with the positioning session identifier.
(b) The second terminal releases, based on the third SLPP message, the positioning session corresponding to the positioning session identifier.

Specifically, after receiving the third SLPP message sent by the first terminal, the second terminal may release, based on the third SLPP message, the positioning session corresponding to the positioning session identifier.

Optionally, that the third SLPP message is correlated with the positioning session identifier includes: the positioning session identifier is carried in a message that is of a protocol layer below SLPP and that corresponds to the third SLPP message.

Specifically, that the first terminal sends a third SLPP message to the second terminal includes: the SLPP layer of the first terminal generates the third SLPP message, the SLPP layer of the first terminal delivers the third SLPP message and the correlated positioning session identifier to a layer below the SLPP layer of the first terminal, and the layer below the SLPP layer generates a message, where the message includes a container (container) corresponding to the third SLPP message and the correlated positioning session identifier. The layer below the SLPP layer may be the PC5-S layer or the PDCP layer. The first terminal sends the message generated by the layer below the SLPP layer to a peer layer of the second terminal (the PC5-S layer or the PDCP layer of the second terminal), and the peer layer of the second terminal delivers the third SLPP message and the correlated positioning session identifier in the message to the SLPP layer of the second terminal.

Optionally, the third SLPP message includes second indication information, where the second indication information is used to instruct the second terminal to release the positioning session corresponding to the positioning session identifier; or the third SLPP message is used to request or command the second terminal to release the positioning session corresponding to the positioning session identifier.

Specifically, the third SLPP message may further include the second indication information, where the second indication information is used to instruct the second terminal to release the positioning session corresponding to the positioning session identifier; or the third SLPP message may be used to request or command the second terminal to release the positioning session corresponding to the positioning session identifier, that is, the third SLPP message is a positioning session release request or release command message.

Optionally, after the second terminal releases the positioning session corresponding to the positioning session identifier, the method further includes:
the second terminal sends a fourth SLPP message to the first terminal, where the fourth SLPP message includes the positioning session identifier, or the fourth SLPP message is correlated with the positioning session identifier.

Specifically, after the second terminal releases the positioning session corresponding to the positioning session identifier, the second terminal sends the fourth SLPP message to the first terminal, where the fourth SLPP message includes the positioning session identifier, or the fourth SLPP message is correlated with the positioning session identifier. The fourth SLPP message may be a positioning session release complete message corresponding to the positioning session identifier. After receiving the fourth SLPP message sent by the second terminal, the first terminal may release, based on the fourth SLPP message, the positioning session corresponding to the positioning session identifier. In this case, the first terminal releases the positioning session corresponding to the positioning session identifier.

Optionally, that the fourth SLPP message is correlated with the positioning session identifier includes: the positioning session identifier is carried in a message that is of a protocol layer below SLPP and that corresponds to the fourth SLPP message.

Specifically, that the second terminal sends the fourth SLPP message to the first terminal includes: the SLPP layer of the second terminal generates the fourth SLPP message, the SLPP layer of the second terminal delivers the fourth SLPP message and the correlated positioning session identifier to a layer below the SLPP layer of the second terminal, and the layer below the SLPP layer generates a message, where the message includes a container (container) corresponding to the fourth SLPP message and the correlated positioning session identifier. The layer below the SLPP layer may be the PC5-S layer or the PDCP layer. The second terminal sends the message generated by the layer below the SLPP layer to a peer layer of the first terminal (the PC5-S layer or the PDCP layer of the first terminal), and the peer layer of the first terminal delivers the fourth SLPP message and the correlated positioning session identifier in the message to the SLPP layer of the first terminal.

In the sidelink-based positioning method provided in this embodiment of this application, the second terminal sends the fourth SLPP message to the first terminal, where the fourth SLPP message includes the positioning session identifier, or the fourth SLPP message is correlated with the positioning session identifier, so that the first terminal releases, based on the fourth SLPP message, the positioning session corresponding to the positioning session identifier, and that explicit releasing of the positioning session corresponding to the positioning session identifier is implemented, thereby improving resource utilization in the positioning process.

### Case 2: implicit release

Optionally, the method further includes:
in a case that the second terminal completes a sidelink positioning corresponding to the positioning session identifier, the second terminal releases the positioning session corresponding to the positioning session identifier.

Specifically, in the case that the second terminal completes the sidelink positioning corresponding to the positioning session identifier, that is, after the second terminal completes measurement and sends a corresponding measurement result (for example, sends location information of the target terminal), the second terminal automatically releases the positioning session corresponding to the positioning session identifier.

Optionally, that the second terminal releases the positioning session corresponding to the positioning session identifier includes any one of the following:
(1) In a case that a count of reports of positioning measurement results corresponding to the positioning session identifier reaches a first preset threshold, the second terminal releases the positioning session.
   Specifically, in the case that the count of reports of positioning measurement results corresponding to the positioning session identifier and reported by the second terminal reaches the first preset threshold, the second terminal may automatically release the positioning session corresponding to the positioning session identifier.
(2) In a case that a duration of reporting positioning measurement results corresponding to the positioning session identifier reaches a second preset threshold, the second terminal releases the positioning session.
   Specifically, in the case that the duration of reporting positioning measurement results corresponding to the positioning session identifier and reported by the second terminal reaches the second preset threshold, the second terminal may automatically release the positioning session corresponding to the positioning session identifier.
(3) In a case that a message corresponding to the positioning session is received, the second terminal starts or resets a timer, and in a case that the timer expires, releases the positioning session.

Specifically, in the case that the second terminal receives the message corresponding to the positioning session, the second terminal starts or resets the timer, that is, starts or resets the timer after the second terminal receives an SLPP message corresponding to the same positioning session, and in the case that the timer expires, the second terminal may automatically release the positioning session.

It should be noted that the explicit release and the implicit release may be used together. For example, the second terminal releases the positioning session after receiving a release message or a release indication, or releases the positioning session corresponding to the positioning session identifier if no release message or no release indication is received but no SLPP message of the positioning session is received within a period of time.

Next, a sidelink-based positioning method provided in this application is further described in more detail by using a specific embodiment.

Embodiment 1: A first terminal assigns a positioning session identifier corresponding to a sidelink positioning when determining to perform the sidelink positioning, and when sending a first SLPP message to a second terminal (target UE or anchor UE), carries the assigned positioning session identifier in the message.

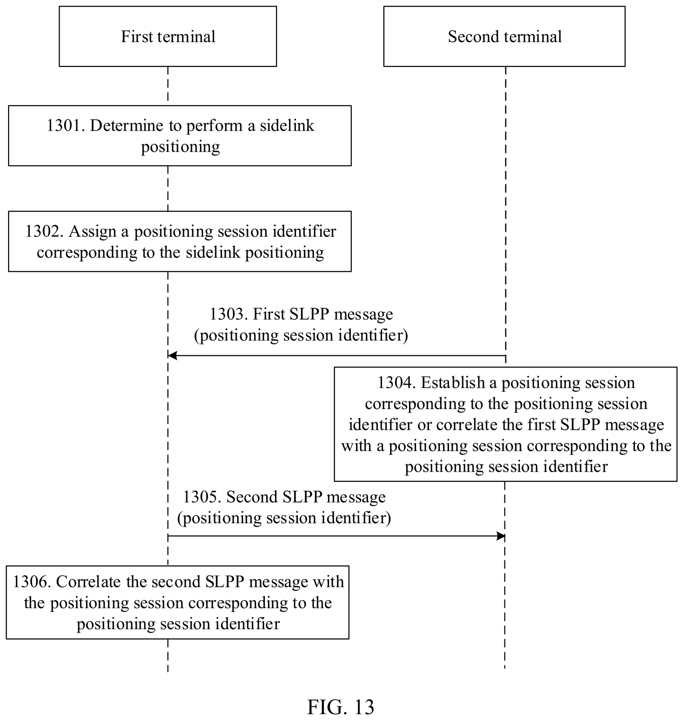

FIG. 13 is a first schematic interaction diagram of a sidelink-based positioning method according to an embodiment of this application. As shown in FIG. 13, the method includes step 1301 to step 1306.

Step 1301: A first terminal determines to perform a sidelink positioning, where the determining to perform a sidelink positioning may be understood as determining to start performing a positioning task or start a new positioning session. For example, first UE determines to perform an SL positioning process when receiving a positioning service request or triggering a sidelink positioning requirement.

Step 1302: The first terminal assigns a positioning session identifier corresponding to the sidelink positioning. The first UE assigns a positioning session identifier (for example, an SLPP session ID or an SL positioning session ID) to the sidelink positioning determined to be performed. SLPP messages exchanged in the process of sidelink positioning are correlated with this SLPP session ID, or SLPP messages exchanged in the positioning task are correlated together by using the SL positioning session ID. The first terminal is a terminal that determines to perform the sidelink positioning process, or a terminal that controls the sidelink positioning process (that is, a terminal that is responsible for completing this positioning task), or the first terminal is a terminal that receives a positioning service request, or the first terminal may be a terminal that determines to start a new positioning session to perform specific sidelink positioning.

Step 1303: The first terminal sends a first sidelink positioning protocol SLPP message to a second terminal, where the first SLPP message includes the positioning session identifier, or the first SLPP message is correlated with the positioning session identifier. Specifically, the first terminal sends the first SLPP message to the second terminal by using a sidelink unicast connection, where the first SLPP message includes the assigned positioning session identifier or the first SLPP message is correlated with the assigned positioning session identifier. The positioning session identifier indicates a positioning session with which the first SLPP message is correlated.

Further, the positioning session identifier included in the first SLPP message may be specifically understood as a positioning session identifier represented in the SLPP protocol, and the positioning session identifier is used as an information element in the SLPP message.

Further, the first SLPP message is correlated with the positioning session identifier, where the correlation may be understood as: the positioning session identifier is carried in a message that is of a protocol layer (for example, a PC5-S layer or a PDCP layer) below the SLPP protocol. Specifically, that the first terminal sends a first SLPP message to a second terminal includes: an SLPP layer of the first terminal generates the first SLPP message, the SLPP layer of the first terminal delivers the first SLPP message and the correlated positioning session identifier to a layer below the SLPP layer of the first terminal, and the layer below the SLPP layer generates a message, where the message includes a container corresponding to the first SLPP message and the correlated positioning session identifier. The first terminal sends the message to a peer layer of the second terminal (a PC5-S layer or a PDCP layer of the second terminal). The peer layer of the second terminal delivers the first SLPP message and the correlated positioning session identifier in the message to an SLPP layer of the second terminal.

Step 1304: The second terminal establishes, based on the first SLPP message, the positioning session corresponding to the positioning session identifier or correlates the first SLPP message with the positioning session corresponding to the positioning session identifier. Specifically, the second terminal determines whether the positioning session identifier exists in a context of the second terminal, and if the second terminal determines that the positioning session identifier is a new positioning session identifier (that is, the positioning session identifier does not exist in the context of the second terminal, and no positioning session corresponds to the positioning session identifier), establishes the positioning session corresponding to the positioning session identifier, and correlates the positioning session identifier with the established positioning session. In a case that the positioning session identifier exists in the context of the second terminal, the second terminal correlates the first SLPP message with the positioning session corresponding to the positioning session identifier.

Step 1305: The second terminal sends a second SLPP message to the first terminal, where the second SLPP message includes the positioning session identifier or the second SLPP message is correlated with the positioning session identifier. Specifically, when the second terminal needs to send the second SLPP message to the first terminal, the second SLPP message includes the positioning session identifier or the second SLPP message is correlated with the positioning session identifier.

Step 1306: The first terminal correlates the second SLPP message with the positioning session corresponding to the positioning session identifier.

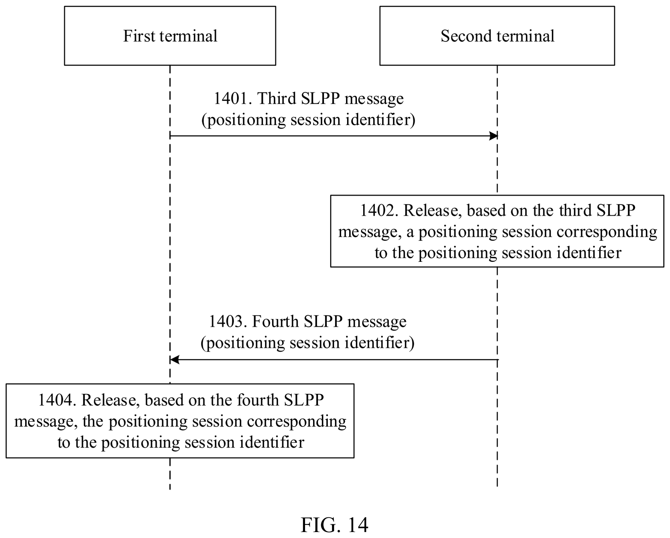

FIG. 14 is a second schematic interaction diagram of a sidelink-based positioning method according to an embodiment of this application. As shown in FIG. 14, the method includes step 1401 to step 1404.

Step 1401: A first terminal sends a third SLPP message to a second terminal, where the third SLPP message includes a positioning session identifier, or the third SLPP message is correlated with a positioning session identifier. Specifically, after a sidelink positioning process is completed, a positioning session needs to be released in a timely manner, and the first terminal that assigns the positioning session identifier sends the third SLPP message to the second terminal, where the third SLPP message includes the positioning session identifier, or the third SLPP message is correlated with the positioning session identifier. Further, the third SLPP message may be a positioning session release request or release command message, or the third SLPP message includes second indication information, where the second indication information is used to instruct to release the positioning session corresponding to the positioning session identifier.

Step 1402: After receiving the third SLPP message, the second terminal releases the positioning session corresponding to the positioning session identifier.

Step 1403: The second terminal sends a fourth SLPP message to the first terminal, where the fourth SLPP message includes the positioning session identifier, or the fourth SLPP message is correlated with the positioning session identifier. The fourth SLPP message may be a release response message, for example, a positioning session release complete message.

Step 1404: The first terminal releases, based on the fourth SLPP message, the positioning session corresponding to the positioning session identifier.

Embodiment 2: A requester (initiator) of a positioning request assigns a positioning session identifier (session ID), and carries the assigned session ID in a positioning service request message, where the assigned positioning session identifier is used in a corresponding sidelink positioning process.

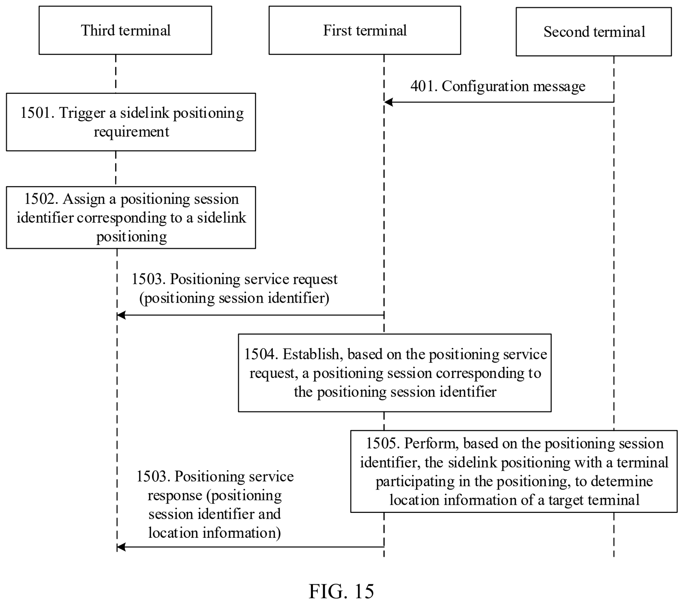

FIG. 15 is a third schematic interaction diagram of a sidelink-based positioning method according to an embodiment of this application. As shown in FIG. 15, the method includes step 1501 to step 1506.

Step 1501: A third terminal triggers a sidelink positioning requirement.

Step 1502: The third terminal assigns a positioning session identifier corresponding to a sidelink positioning.

Step 1503: The third terminal sends a positioning service request to a first terminal, where the positioning service request includes the positioning session identifier corresponding to the sidelink positioning.

Step 1504: The first terminal establishes, based on the positioning service request, a positioning session corresponding to the positioning session identifier.

Step 1505: The first terminal performs, based on the positioning session identifier, the sidelink positioning with a terminal participating in the positioning, to determine location information of a target terminal.

Step 1506: The first terminal sends a positioning service response to the third terminal, where the positioning service response includes the location information of the target terminal and the positioning session identifier.

The sidelink-based positioning method provided in the embodiments of this application may be performed by a sidelink-based positioning apparatus. A sidelink-based positioning apparatus provided in the embodiments of this application is described by assuming that the sidelink-based positioning method is performed by the sidelink-based positioning apparatus in the embodiments of this application.

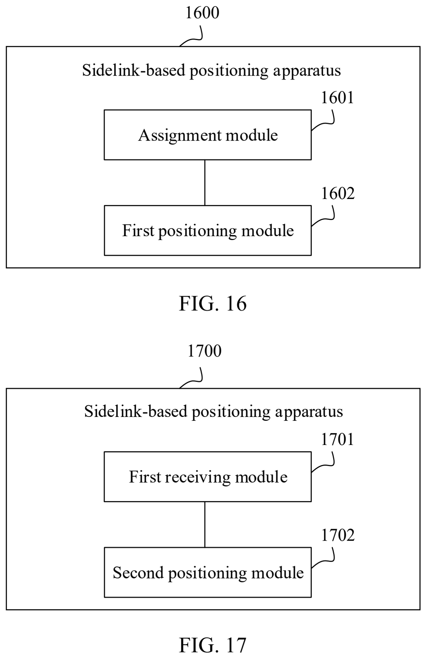

FIG. 16 is a first schematic diagram of a structure of a sidelink-based positioning apparatus according to an embodiment of this application. As shown in FIG. 16, the sidelink-based positioning apparatus 1600 is applied to a first terminal and includes:
an assignment module 1601, configured to: assign a positioning session identifier corresponding to a sidelink positioning when determining to perform the sidelink positioning, or receive a positioning session identifier that is sent by a third terminal and corresponding to a sidelink positioning; and
a first positioning module 1602, configured to perform the sidelink positioning based on the positioning session identifier.

The sidelink-based positioning apparatus provided in this embodiment of this application assigns the positioning session identifier corresponding to the sidelink positioning when determining to perform the sidelink positioning, or receives the positioning session identifier that is sent by the third terminal and corresponding to the sidelink positioning; and then performs, based on the positioning session identifier, the sidelink positioning corresponding to the positioning session identifier. In this way, in a sidelink positioning architecture that is not based on a positioning server, the apparatus can perform the sidelink positioning with another terminal that participates in the positioning, thereby supporting the sidelink positioning based on a positioning session.

Optionally, the positioning session identifier includes either of the following:
partial or complete terminal identification information of the first terminal or the third terminal, and a sequence number or a character string; or
a sequence number or a character string.

Optionally, the assignment module 1601 is specifically configured to perform at least one of the following:
in a case that the first terminal receives a positioning service request, determining to perform the sidelink positioning; and
in a case that the first terminal triggers a positioning requirement, determining to perform the sidelink positioning.

Optionally, the first positioning module 1602 is specifically configured to:
send a first sidelink positioning protocol SLPP message to a second terminal, where the first SLPP message includes the positioning session identifier, or the first SLPP message is correlated with the positioning session identifier.

Optionally, that the first SLPP message is correlated with the positioning session identifier includes: the positioning session identifier is carried in a message that is of a protocol layer below SLPP and that corresponds to the first SLPP message.

Optionally, the first SLPP message includes first indication information, where the first indication information is used to instruct the second terminal to establish a positioning session corresponding to the positioning session identifier; or
the first SLPP message is used to instruct the second terminal to establish a positioning session corresponding to the positioning session identifier.

Optionally, the sidelink-based positioning apparatus 1600 further includes:
a second receiving module, configured to receive a second SLPP message sent by the second terminal, where the second SLPP message includes the positioning session identifier, or the second SLPP message is correlated with the positioning session identifier; and
a correlation module, configured to correlate the second SLPP message with a positioning session corresponding to the positioning session identifier.

Optionally, that the second SLPP message is correlated with the positioning session identifier includes: the positioning session identifier is carried in a message that is of a protocol layer below SLPP and that corresponds to the second SLPP message.

Optionally, the assignment module 1601 is specifically configured to:
receive a positioning service request sent by the third terminal, where the positioning service request is used to request the first terminal to perform the sidelink positioning for a target terminal, and the positioning service request includes the positioning session identifier corresponding to the sidelink positioning.

Optionally, the positioning session identifier is assigned by the third terminal, and the third terminal is an initiator of a positioning service request or a trigger of a positioning requirement.

Optionally, the first positioning module 1602 is specifically configured to:
establish, based on the positioning service request, a positioning session corresponding to the positioning session identifier; and
perform, based on the positioning session identifier, the sidelink positioning with a terminal participating in the positioning, to determine location information of the target terminal.

Optionally, the sidelink-based positioning apparatus 1600 further includes:
a first sending module, configured to send a third SLPP message to the second terminal, where the third SLPP message includes the positioning session identifier, or the third SLPP message is correlated with the positioning session identifier.

Optionally, that the third SLPP message is correlated with the positioning session identifier includes: the positioning session identifier is carried in a message that is of a protocol layer below SLPP and that corresponds to the third SLPP message.

Optionally, the third SLPP message includes second indication information, where the second indication information is used to instruct the second terminal to release a positioning session corresponding to the positioning session identifier; or
the third SLPP message is used to request or command the second terminal to release a positioning session corresponding to the positioning session identifier.

Optionally, the sidelink-based positioning apparatus 1600 further includes:
a second receiving module, configured to receive a fourth SLPP message sent by the second terminal, where the fourth SLPP message includes the positioning session identifier, or the fourth SLPP message is correlated with the positioning session identifier; and
a first releasing module, configured to release, based on the fourth SLPP message, a positioning session corresponding to the positioning session identifier.

Optionally, that the fourth SLPP message is correlated with the positioning session identifier includes: the positioning session identifier is carried in a message that is of a protocol layer below SLPP and that corresponds to the fourth SLPP message.

Optionally, the sidelink-based positioning apparatus 1600 further includes:
a second releasing module, configured to release a positioning session corresponding to the positioning session identifier in a case that the first terminal completes the sidelink positioning.

Optionally, the first terminal includes a positioning server terminal, or a target terminal corresponding to the sidelink positioning.

FIG. 17 is a second schematic diagram of a structure of a sidelink-based positioning apparatus according to an embodiment of this application. As shown in FIG. 17, the sidelink-based positioning apparatus 1700 is applied to a second terminal and includes:
a first receiving module 1701, configured to receive a first sidelink positioning protocol SLPP message sent by a first terminal, where the first SLPP message includes a positioning session identifier, or the first SLPP message is correlated with the positioning session identifier; and
a second positioning module 1702, configured to establish, based on the first SLPP message, a positioning session corresponding to the positioning session identifier, or correlate the first SLPP message with a positioning session corresponding to the positioning session identifier.

The sidelink-based positioning apparatus provided in this embodiment of this application receives the first SLPP message sent by the first terminal, where the first SLPP message includes the positioning session identifier, or the first SLPP message is correlated with the positioning session identifier; and establishes, based on the first SLPP message, the positioning session corresponding to the positioning session identifier or correlates the first SLPP message with the positioning session corresponding to the positioning session identifier, so that the apparatus can perform sidelink positioning in a sidelink positioning architecture that is not based on a positioning server, thereby supporting the sidelink positioning based on the positioning session.

Optionally, the positioning session identifier includes either of the following:
partial or complete terminal identification information of the first terminal or a third terminal, and a sequence number or a character string; or
a sequence number or a character string.

Optionally, that the first SLPP message is correlated with the positioning session identifier includes: the positioning session identifier is carried in a message that is of a protocol layer below SLPP and that corresponds to the first SLPP message.

Optionally, the first SLPP message includes first indication information, where the first indication information is used to instruct the second terminal to establish the positioning session corresponding to the positioning session identifier; or
the first SLPP message is used to instruct the second terminal to establish the positioning session corresponding to the positioning session identifier.

Optionally, the second positioning module 1702 is specifically configured to:
determine whether the positioning session identifier exists in a context of the second terminal; and
in a case that the positioning session identifier does not exist in the context of the second terminal, establish the positioning session corresponding to the positioning session identifier; or
in a case that the positioning session identifier exists in the context of the second terminal, correlate the first SLPP message with the positioning session corresponding to the positioning session identifier.

Optionally, the sidelink-based positioning apparatus 1700 further includes:
a second sending module, configured to send a second SLPP message to the first terminal, where the second SLPP message includes the positioning session identifier, or the second SLPP message is correlated with the positioning session identifier.

Optionally, that the second SLPP message is correlated with the positioning session identifier includes: the positioning session identifier is carried in a message that is of a protocol layer below SLPP and that corresponds to the second SLPP message.

Optionally, the sidelink-based positioning apparatus 1700 further includes:
a third receiving module, configured to receive a third SLPP message sent by the first terminal, where the third SLPP message includes the positioning session identifier, or the third SLPP message is correlated with the positioning session identifier; and
a second releasing module, configured to release, based on the third SLPP message, the positioning session corresponding to the positioning session identifier.

Optionally, that the third SLPP message is correlated with the positioning session identifier includes: the positioning session identifier is carried in a message that is of a protocol layer below SLPP and that corresponds to the third SLPP message.

Optionally, the third SLPP message includes second indication information, where the second indication information is used to instruct the second terminal to release the positioning session corresponding to the positioning session identifier; or
the third SLPP message is used to request or command the second terminal to release the positioning session corresponding to the positioning session identifier.

Optionally, the sidelink-based positioning apparatus 1700 further includes:
a third sending module, configured to send a fourth SLPP message to the first terminal, where the fourth SLPP message includes the positioning session identifier, or the fourth SLPP message is correlated with the positioning session identifier.

Optionally, that the fourth SLPP message is correlated with the positioning session identifier includes: the positioning session identifier is carried in a message that is of a protocol layer below SLPP and that corresponds to the fourth SLPP message.

Optionally, the sidelink-based positioning apparatus 1700 further includes:
a third releasing module, configured to release the positioning session corresponding to the positioning session identifier in a case that the second terminal completes a sidelink positioning corresponding to the positioning session identifier.

Optionally, the third releasing module is specifically configured to implement any one of the following:
in a case that a count of reports of positioning measurement results corresponding to the positioning session identifier reaches a first preset threshold, releasing the positioning session;
in a case that a duration of reporting positioning measurement results corresponding to the positioning session identifier reaches a second preset threshold, releasing the positioning session; and
in a case that a message corresponding to the positioning session is received, starting or resetting a timer, and in a case that the timer expires, releasing the positioning session.

Optionally, the first terminal includes a positioning server terminal or a target terminal corresponding to the sidelink positioning.

The sidelink-based positioning apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The sidelink-based positioning apparatus provided in this embodiment of this application can implement each process implemented in the method embodiment in FIG. 11 to FIG. 15, with the same technical effect achieved. To avoid repetition, details are not described herein again.

An embodiment of this application further provides a first terminal, including a processor and a communication interface. The processor is configured to assign a positioning session identifier corresponding to a sidelink positioning when determining to perform the sidelink positioning. Alternatively, the communication interface is configured to receive a positioning session identifier that is sent by a third terminal and corresponding to a sidelink positioning. The processor is further configured to perform the sidelink positioning based on the positioning session identifier. The first terminal embodiment corresponds to the foregoing method embodiment on the first terminal side, and each implementation process and implementation of the foregoing method embodiment can be applied to the first terminal embodiment, with the same technical effect achieved.

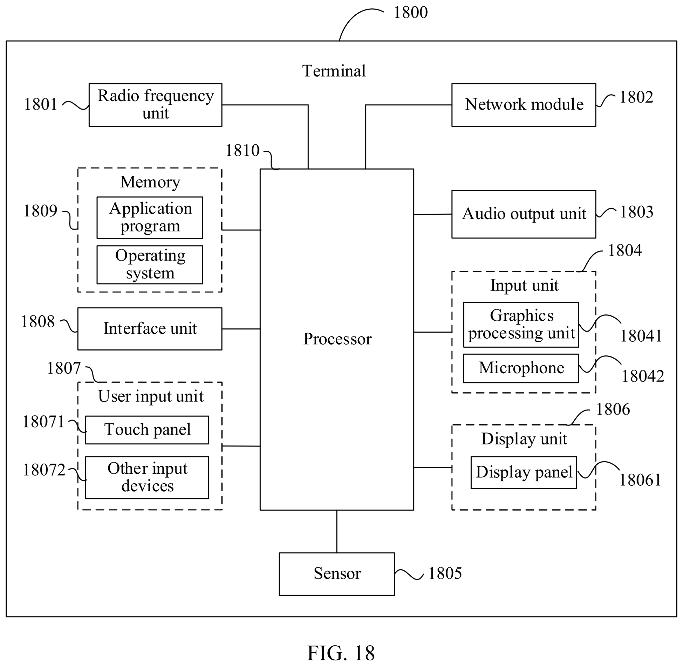

FIG. 18 is a schematic diagram of a structure of a terminal according to an embodiment of this application. As shown in FIG. 18, the terminal 1800 includes but is not limited to at least some components such as a radio frequency unit 1801, a network module 1802, an audio output unit 1803, an input unit 1804, a sensor 1805, a display unit 1806, a user input unit 1807, an interface unit 1808, a memory 1809, and a processor 1810.

A person skilled in the art may understand that the terminal 1800 may further include a power supply (for example, a battery) supplying power to all components. The power supply may be logically connected to the processor 1810 through a power management system. In this way, functions such as charge management, discharge management, and power consumption management are implemented by using the power management system. The terminal structure shown in FIG. 18 does not constitute a limitation on the terminal. The terminal may include more or fewer components than those shown in the figure, or some components are combined, or component arrangements are different. Details are not described herein again.

It should be understood that, in this embodiment of this application, the input unit 1804 may include a graphics processing unit (Graphics Processing Unit, GPU) 18041 and a microphone 18042. The graphics processing unit 18041 processes image data of a still picture or video obtained by an image capture apparatus (such as a camera) in a video capture mode or an image capture mode. The display unit 1806 may include a display panel 18061, and the display panel 18061 may be configured in a form of a liquid crystal display, an organic light-emitting diode, or the like. The user input unit 1807 includes at least one of a touch panel 18071 and other input devices 18072. The touch panel 18071 is also referred to as a touchscreen. The touch panel 18071 may include two parts: a touch detection apparatus and a touch controller. The other input devices 18072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1801 may transmit the downlink data to the processor 1810 for processing. In addition, the radio frequency unit 1801 may send uplink data to the network-side device. Usually, the radio frequency unit 1801 includes but is not limited to an antenna, an amplifier, a transceiver, a coupler, a low noise amplifier, a duplexer, and the like.

The memory 1809 may be configured to store software programs or instructions and various data. The memory 1809 may primarily include a first storage area for storing programs or instructions and a second storage area for storing data. The first storage area may store an operating system, an application program or instructions required by at least one function (such as an audio play function and an image play function), and the like. In addition, the memory 1809 may include a volatile memory or a non-volatile memory, or the memory 1809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1809 in this embodiment of this application includes but is not limited to these and any other suitable types of memories.

The processor 1810 may include one or more processing units. Optionally, the processor 1810 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1810.

For example, when the terminal 1800 is a first terminal, the radio frequency unit 1801 is configured to: assign a positioning session identifier corresponding to a sidelink positioning when determining to perform the sidelink positioning, or receive a positioning session identifier that is sent by a third terminal and corresponding to a sidelink positioning; and
the processor 1810 is configured to perform the sidelink positioning based on the positioning session identifier.

The first terminal provided in this embodiment of this application assigns the positioning session identifier corresponding to the sidelink positioning when determining to perform the sidelink positioning, or receives the positioning session identifier that is sent by the third terminal and corresponding to the sidelink positioning; and then performs, based on the positioning session identifier, the sidelink positioning corresponding to the positioning session identifier. In this way, in a sidelink positioning architecture that is not based on a positioning server, the first terminal can perform the sidelink positioning with another terminal that participates in the sidelink positioning, thereby supporting the sidelink positioning based on a positioning session.

For example, when the terminal 1800 is a second terminal, the radio frequency unit 1801 is configured to receive a first sidelink positioning protocol SLPP message sent by a first terminal, where the first SLPP message includes a positioning session identifier, or the first SLPP message is correlated with the positioning session identifier; and
the processor is configured to establish, based on the first SLPP message, a positioning session corresponding to the positioning session identifier, or correlate the first SLPP message with a positioning session corresponding to the positioning session identifier.

The second terminal provided in this embodiment of this application receives the first SLPP message sent by the first terminal, where the first SLPP message includes the positioning session identifier, or the first SLPP message is correlated with the positioning session identifier; and the second terminal may establish, based on the first SLPP message, the positioning session corresponding to the positioning session identifier or correlate the first SLPP message with the positioning session corresponding to the positioning session identifier, so that the second terminal can perform sidelink positioning in a sidelink positioning architecture that is not based on a positioning server, thereby supporting the sidelink positioning based on the positioning session.

An embodiment of this application further provides a second terminal, including a processor and a communication interface. The communication interface is configured to receive a first sidelink positioning protocol SLPP message sent by a first terminal, where the first SLPP message includes a positioning session identifier, or the first SLPP message is correlated with the positioning session identifier. The processor is configured to establish, based on the first SLPP message, a positioning session corresponding to the positioning session identifier, or correlate the first SLPP message with a positioning session corresponding to the positioning session identifier. The second terminal embodiment corresponds to the foregoing method embodiment on the second terminal side, and each implementation process and implementation of the foregoing method embodiment can be applied to the second terminal embodiment, with the same technical effect achieved.

An embodiment of this application further provides a sidelink-based positioning system, including a first terminal and a second terminal. The first terminal may be configured to perform the steps of the foregoing sidelink-based positioning method on the first terminal side. The second terminal may be configured to perform the steps of the foregoing sidelink-based positioning method on the second terminal side.

An embodiment of this application further provides a readable storage medium. The readable storage medium may be volatile or non-volatile. The readable storage medium stores a program or instructions. When the program or instructions are executed by a processor, each process of the foregoing embodiment of the sidelink-based positioning method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the sidelink-based positioning method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the sidelink-based positioning method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A sidelink-based positioning method, comprising:
assigning, by a first terminal, a positioning session identifier corresponding to a sidelink positioning when determining to perform the sidelink positioning, or receiving, by a first terminal, a positioning session identifier that is sent by a third terminal and corresponding to a sidelink positioning; and
performing, by the first terminal, the sidelink positioning based on the positioning session identifier.

2. The sidelink-based positioning method according to claim 1, wherein the positioning session identifier comprises either of the following:
partial or complete terminal identification information of the first terminal or the third terminal, and a sequence number or a character string; or
a sequence number or a character string.

3. The sidelink-based positioning method according to claim 2, wherein the determining to perform the sidelink positioning by the first terminal comprises at least one of the following:
in a case that the first terminal receives a positioning service request, determining, by the first terminal, to perform the sidelink positioning; and
in a case that the first terminal triggers a positioning requirement, determining, by the first terminal, to perform the sidelink positioning.

4. The sidelink-based positioning method according to any one of claims 1 to 3, wherein the performing, by the first terminal, the sidelink positioning based on the positioning session identifier comprises:
sending, by the first terminal, a first sidelink positioning protocol SLPP message to a second terminal, wherein the first SLPP message comprises the positioning session identifier, or the first SLPP message is correlated with the positioning session identifier.

5. The sidelink-based positioning method according to claim 4, wherein that the first SLPP message is correlated with the positioning session identifier comprises: the positioning session identifier is carried in a message that is of a protocol layer below SLPP and that corresponds to the first SLPP message.

6. The sidelink-based positioning method according to claim 5, wherein the first SLPP message comprises first indication information, wherein the first indication information is used to instruct the second terminal to establish a positioning session corresponding to the positioning session identifier; or
the first SLPP message is used to instruct the second terminal to establish a positioning session corresponding to the positioning session identifier.

7. The sidelink-based positioning method according to any one of claims 4 to 6, wherein the method further comprises:
receiving, by the first terminal, a second SLPP message sent by the second terminal, wherein the second SLPP message comprises the positioning session identifier, or the second SLPP message is correlated with the positioning session identifier; and
correlating, by the first terminal, the second SLPP message with a positioning session corresponding to the positioning session identifier.

8. The sidelink-based positioning method according to claim 7, wherein that the second SLPP message is correlated with the positioning session identifier comprises: the positioning session identifier is carried in a message that is of a protocol layer below SLPP and that corresponds to the second SLPP message.

9. The sidelink-based positioning method according to claim 2, wherein the receiving, by a first terminal, a positioning session identifier that is sent by a third terminal and corresponding to a sidelink positioning comprises:
receiving, by the first terminal, a positioning service request sent by the third terminal, wherein the positioning service request is used to request the first terminal to perform the sidelink positioning for a target terminal, and the positioning service request comprises the positioning session identifier corresponding to the sidelink positioning.

10. The sidelink-based positioning method according to claim 9, wherein the positioning session identifier is assigned by the third terminal, and the third terminal is an initiator of a positioning service request or a trigger of a positioning requirement.

11. The sidelink-based positioning method according to claim 9 or 10, wherein the performing, by the first terminal, the sidelink positioning based on the positioning session identifier comprises:
establishing, by the first terminal based on the positioning service request, a positioning session corresponding to the positioning session identifier; and
performing, by the first terminal based on the positioning session identifier, the sidelink positioning with a terminal participating in the positioning, to determine location information of the target terminal.

12. The sidelink-based positioning method according to claim 11, wherein the method further comprises:
sending, by the first terminal, a positioning service response to the third terminal, wherein the positioning service response comprises the location information of the target terminal and the positioning session identifier.

13. The sidelink-based positioning method according to any one of claims 4 to 12, wherein the method further comprises:
sending, by the first terminal, a third SLPP message to the second terminal, wherein the third SLPP message comprises the positioning session identifier, or the third SLPP message is correlated with the positioning session identifier.

14. The sidelink-based positioning method according to claim 13, wherein that the third SLPP message is correlated with the positioning session identifier comprises: the positioning session identifier is carried in a message that is of a protocol layer below SLPP and that corresponds to the third SLPP message.

15. The sidelink-based positioning method according to claim 14, wherein the third SLPP message comprises second indication information, wherein the second indication information is used to instruct the second terminal to release a positioning session corresponding to the positioning session identifier; or
the third SLPP message is used to request or command the second terminal to release a positioning session corresponding to the positioning session identifier.

16. The sidelink-based positioning method according to any one of claims 13 to 15, wherein the method further comprises:
receiving, by the first terminal, a fourth SLPP message sent by the second terminal, wherein the fourth SLPP message comprises the positioning session identifier, or the fourth SLPP message is correlated with the positioning session identifier; and
releasing, by the first terminal based on the fourth SLPP message, a positioning session corresponding to the positioning session identifier.

17. The sidelink-based positioning method according to claim 16, wherein that the fourth SLPP message is correlated with the positioning session identifier comprises: the positioning session identifier is carried in a message that is of a protocol layer below SLPP and that corresponds to the fourth SLPP message.

18. The sidelink-based positioning method according to any one of claims 1 to 17, wherein the method further comprises:
in a case that the first terminal completes the sidelink positioning, releasing, by the first terminal, a positioning session corresponding to the positioning session identifier.

19. The sidelink-based positioning method according to any one of claims 1 to 18, wherein the first terminal comprises a positioning server terminal, or a target terminal corresponding to the sidelink positioning.

20. A sidelink-based positioning method, comprising:
receiving, by a second terminal, a first sidelink positioning protocol SLPP message sent by a first terminal, wherein the first SLPP message comprises a positioning session identifier, or the first SLPP message is correlated with the positioning session identifier; and
establishing, by the second terminal based on the first SLPP message, a positioning session corresponding to the positioning session identifier, or correlating the first SLPP message with a positioning session corresponding to the positioning session identifier.

21. The sidelink-based positioning method according to claim 20, wherein the positioning session identifier comprises either of the following:
partial or complete terminal identification information of the first terminal or a third terminal, and a sequence number or a character string; and
a sequence number or a character string.

22. The sidelink-based positioning method according to claim 20, wherein that the first SLPP message is correlated with the positioning session identifier comprises: the positioning session identifier is carried in a message that is of a protocol layer below SLPP and that corresponds to the first SLPP message.

23. The sidelink-based positioning method according to any one of claims 20 to 22, wherein the first SLPP message comprises first indication information, wherein the first indication information is used to instruct the second terminal to establish the positioning session corresponding to the positioning session identifier; or
the first SLPP message is used to instruct the second terminal to establish the positioning session corresponding to the positioning session identifier.

24. The sidelink-based positioning method according to any one of claims 20 to 23, wherein the establishing, by the second terminal based on the first SLPP message, a positioning session corresponding to the positioning session identifier, or correlating the first SLPP message with a positioning session corresponding to the positioning session identifier comprises:
determining, by the second terminal, whether the positioning session identifier exists in a context of the second terminal; and
in a case that the positioning session identifier does not exist in the context of the second terminal, establishing, by the second terminal, the positioning session corresponding to the positioning session identifier; or
in a case that the positioning session identifier exists in the context of the second terminal, correlating, by the second terminal, the first SLPP message with the positioning session corresponding to the positioning session identifier.

25. The sidelink-based positioning method according to any one of claims 20 to 24, wherein the method further comprises:
sending, by the second terminal, a second SLPP message to the first terminal, wherein the second SLPP message comprises the positioning session identifier, or the second SLPP message is correlated with the positioning session identifier.

26. The sidelink-based positioning method according to claim 25, wherein that the second SLPP message is correlated with the positioning session identifier comprises: the positioning session identifier is carried in a message that is of a protocol layer below SLPP and that corresponds to the second SLPP message.

27. The sidelink-based positioning method according to any one of claims 20 to 26, wherein the method further comprises:
receiving, by the second terminal, a third SLPP message sent by the first terminal, wherein the third SLPP message comprises the positioning session identifier, or the third SLPP message is correlated with the positioning session identifier; and
releasing, by the second terminal based on the third SLPP message, the positioning session corresponding to the positioning session identifier.

28. The sidelink-based positioning method according to claim 27, wherein that the third SLPP message is correlated with the positioning session identifier comprises: the positioning session identifier is carried in a message that is of a protocol layer below SLPP and that corresponds to the third SLPP message.

29. The sidelink-based positioning method according to claim 28, wherein the third SLPP message comprises second indication information, wherein the second indication information is used to instruct the second terminal to release the positioning session corresponding to the positioning session identifier; or
the third SLPP message is used to request or command the second terminal to release the positioning session corresponding to the positioning session identifier.

30. The sidelink-based positioning method according to any one of claims 27 to 29, wherein the method further comprises:
sending, by the second terminal, a fourth SLPP message to the first terminal, wherein the fourth SLPP message comprises the positioning session identifier, or the fourth SLPP message is correlated with the positioning session identifier.

31. The sidelink-based positioning method according to claim 29, wherein that the fourth SLPP message is correlated with the positioning session identifier comprises: the positioning session identifier is carried in a message that is of a protocol layer below SLPP and that corresponds to the fourth SLPP message.

32. The sidelink-based positioning method according to any one of claims 20 to 31, wherein the method further comprises:
in a case that the second terminal completes sidelink positioning corresponding to the positioning session identifier, releasing, by the second terminal, the positioning session corresponding to the positioning session identifier.

33. The sidelink-based positioning method according to claim 32, wherein the releasing, by the second terminal, the positioning session corresponding to the positioning session identifier comprises any one of the following:
in a case that a count of reports of positioning measurement results corresponding to the positioning session identifier reaches a first preset threshold, releasing, by the second terminal, the positioning session;
in a case that a duration of reporting positioning measurement results corresponding to the positioning session identifier reaches a second preset threshold, releasing, by the second terminal, the positioning session; and
in a case that a message corresponding to the positioning session is received, starting or resetting, by the second terminal, a timer, and in a case that the timer expires, releasing the positioning session.

34. The sidelink-based positioning method according to any one of claims 20 to 33, wherein the first terminal comprises a positioning server terminal or a target terminal corresponding to the sidelink positioning.

35. A sidelink-based positioning apparatus, comprising:
an assignment module, configured to: assign a positioning session identifier corresponding to a sidelink positioning when determining to perform the sidelink positioning, or receive a positioning session identifier that is sent by a third terminal and corresponding to a sidelink positioning; and
a first positioning module, configured to perform the sidelink positioning based on the positioning session identifier.

36. A sidelink-based positioning apparatus, comprising:
a first receiving module, configured to receive a first sidelink positioning protocol SLPP message sent by a first terminal, wherein the first SLPP message comprises a positioning session identifier, or the first SLPP message is correlated with the positioning session identifier; and
a second positioning module, configured to establish, based on the first SLPP message, a positioning session corresponding to the positioning session identifier, or correlate the first SLPP message with a positioning session corresponding to the positioning session identifier.

37. A first terminal, comprising a processor and a memory, wherein the memory stores a program or instructions capable of running on the processor, and when the program or instructions are executed by the processor, the steps of the sidelink-based positioning method according to any one of claims 1 to 19 are implemented.

38. A second terminal, comprising a processor and a memory, wherein the memory stores a program or instructions capable of running on the processor, and when the program or instructions are executed by the processor, the steps of the sidelink-based positioning method according to any one of claims 20 to 34 are implemented.

39. A readable storage medium, wherein the readable storage medium stores a program or instructions, and when the program or instructions are executed by a processor, the steps of the sidelink-based positioning method according to any one of claims 1 to 19 are implemented, or the steps of the sidelink-based positioning method according to any one of claims 20 to 34 are implemented.
